# EUROPEAN PATENT SPECIFICATION

(11) **EP 4 411 596 B1**
(45) Date of publication and mention of the grant of the patent: **09.09.2026**
(21) Application number: 24155432.8
(22) Date of filing: 02.02.2024
(51) Int. Cl.: G06N 3/082, G06V 10/82

(54) **METHOD FOR CLASSIFIER LEARNING FROM A STREAM OF DATA ON A RESOURCE-CONSTRAINED DEVICE**
VERFAHREN ZUM KLASSIFIKATORLERNEN AUS EINEM DATENSTROM AUF EINER BETRIEBSMITTELBESCHRÄNKTEN EINRICHTUNG
PROCÉDÉ D'APPRENTISSAGE DE CLASSIFICATEUR À PARTIR D'UN FLUX DE DONNÉES SUR UN DISPOSITIF À RESSOURCES LIMITÉES

(30) Priority: 03.02.2023 US 202318105729
(43) Date of publication of application: 07.08.2024
(73) Proprietor: STMicroelectronics International N.V., 1228 Plan-les-Ouates, Geneva (CH)
(72) Inventor: PAU, Danilo Pietro, I-20099 Sesto San Giovanni (Milano) (IT); KUMAR AMBROSE, Prem, I-20156 Milano (IT)
(74) Representative: Buzzi, Notaro & Antonielli d'Oulx S.p.A.

(56) References cited:
- KR-B1- 102 082 999
- CHAO SUI ET AL: "A Restricted Coulomb Energy (RCE) Neural Network System for Hand Image Segmentation", COMPUTER AND ROBOT VISION (CRV), 2011 CANADIAN CONFERENCE ON, IEEE, 25 May 2011 (2011-05-25), pages 270 - 277, XP031897335, ISBN: 978-1-61284-430-5, DOI: 10.1109/CRV.2011.43
- FAN HONGGUANG ET AL: "An optimized probabilistic neural network with unit hyperspherical crown mapping and adaptive kernel coverage", ARXIV,, vol. 373, 24 September 2019 (2019-09-24), pages 24 - 34, XP085910426, DOI: 10.1016/J.NEUCOM.2019.09.029
- LI XIAOXU ET AL: "OSLNet: Deep Small-Sample Classification With an Orthogonal Softmax Layer", IEEE TRANSACTIONS ON IMAGE PROCESSING, IEEE, USA, vol. 29, 6 May 2020 (2020-05-06), pages 6482 - 6495, XP011796891, ISSN: 1057-7149, [retrieved on 20200630], DOI: 10.1109/TIP.2020.2990277
- PAU DANILO ET AL: "TinyRCE: Forward Learning Under Tiny Constraints", 2023 IEEE INTERNATIONAL CONFERENCE ON METROLOGY FOR EXTENDED REALITY, ARTIFICIAL INTELLIGENCE AND NEURAL ENGINEERING (METROXRAINE), IEEE, 25 October 2023 (2023-10-25), pages 295 - 300, XP034535585, DOI: 10.1109/METROXRAINE58569.2023.10405784

## Description

### TECHNOLOGICAL FIELD

Example embodiments of the present disclosure relate to artificial intelligence and machine learning, such as artificial intelligence and machine learning on resource constrained devices or systems utilizing classifier learning from a stream of a limited amount of data as the data are acquired by a sensor in temporal order, for instance.

### BACKGROUND

Artificial intelligence and machine learning utilizing neural networks involve the training of the neural networks. Training is a process to let a neural network learn output parameters from available samples of input data, including how to determine one or more outputs based on one or more inputs. Such inputs generally include large amounts of data that require large amounts of storage space and processing power for the training or the learning of the neural network. Apparatuses and systems performing the training or learning are commonly large systems, such as cloud-based multi-CPU, multi-GPU, or multi-TPU systems, that utilize the large amount of data over long periods of time to train the neural network. These systems utilize computation resources allowing for several teraflops to petaflops that have very high energy consumption. Thus, the training process may happen on an apparatus or system, such as a cloud-based system, that is different from a system or computing machine that may be acquiring data, for instance. This allows for the apparatus or system performing the training process to utilize large computational resources and large memory storage. Therefore, the training takes place much ahead of time with a system distinct from a device that may later use the trained neural network. Once trained, that neural network would then be loaded to different devices for operation. For example, sensor data may be collected over time and stored in large data sets, such as over 1,000,000 samples of sensor data for any one class, that are used at later times to train neural networks. The storage of large amounts of data may be in data sets. Each data sample of a data set may be labeled to identify an associated class or classification of the data sample so that a neural network may be trained with the sample data. The labeling allows for the determination if the training is being performed correctly. The training of or learning done by the neural networks includes the setting of coefficients between the plurality of a fixed number of neurons that make up a neural network, which may use back-propagation and stochastic gradient descent techniques and recipes (such as learning rate, knowledge distillation, k-fold procedures) to drive this training or learning process. Once the training or learning is finished, the coefficients are stabilized to set values for use in operation of the neural network.

However, the use of large data sets requires large amounts of device or system resources. For example, the large amount of data requires a large amount of storage space to store the data samples. Additionally, large computing resources are required to perform the computationally complex training or learning procedures. For example, over time as cloud-based systems have offered greater amount of computing resources (e.g., billions of petaflops) and large amounts of storage (e.g., 10's of GigaBytes of dedicated storage) the training of neural networks has utilized the increases in computational resources and memory to grow more complicated. Indeed, after the training, the neural networks optimized for the large data sets may include large numbers of neurons (fixed and not changeable in their amount during training) that may take a large amount of space to store and processing power to utilize the large amounts of neurons in a trained neural network. New methods, apparatuses, systems, and computer programming products in artificial intelligence and machine learning for resource constrained devices and systems are needed. The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail in the following.

Document C. Sui et al.: "A Restricted Coulomb Energy (RCE) Neural Network System for Hand Image Segmentation," 2011 Canadian Conference on Computer and Robot Vision, St. John's, NL, Canada, 2011, pp. 270-277, doi: 10.1109/CRV.2011.43 discusses a hands segmentation scheme based on human skin color classification using the Restricted Coulomb Energy (RCE) neural network, where an improved iteration strategy for the RCE neural network, with a reduction in the number of repetitive calculations.

Document Hongguang Fan et al.: "An optimized probabilistic neural network with unit hyperspherical crown mapping and adaptive kernel coverage", Neurocomputing, Volume 373, 2020, Pages 24-34, ISSN 0925-2312, doi: 10.1016/j.neucom.2019.09.029 discusses an optimized hyperspherical crown probabilistic neural network(HCPNN) comprising an unconventional unit hyperspherical crown mapping model in the sample space, where theoretical analysis indicates that nonlinear mapping can improve the separability of the original sample set under certain conditions.

### BRIEF SUMMARY

Various embodiments described herein relate to methods, apparatuses, systems, and computer program products for artificial intelligence and machine learning for resource constrained devices and systems are used.

In accordance with some embodiments of the present disclosure, an example method for classifier learning is provided. In some embodiments, the example method for classifier learning may comprise: sampling a sensor data stream to generate a plurality of sensor data samples; extracting, via a feature extractor, a plurality of extracted features from the sensor data samples; determining, via a classifier and based the extracted features, a detection of a new feature of the one or more of the extracted features, wherein the classifier comprises at least an input layer of input neurons, a hidden layer of hidden neurons, and an output layer of output neurons, wherein each hidden neuron is associated with one output neuron, wherein each output neuron is associated with one class; training the classifier based on the plurality of extracted features comprising: adding a new hidden neuron, wherein the new hidden neuron is associated with the new feature; determining an age for each of the hidden neurons; and removing one or more hidden neurons based on the age of each the hidden neurons.

In some embodiments, each sensor data sample of the sensor data samples includes a first plurality of dimensions, extracting a plurality of extracted features from the sensor data samples includes extracting a plurality of extracted features that includes a second plurality of dimensions; and the second plurality of dimensions is reduced from the first plurality of dimensions.

In some embodiments, removing one or more hidden neurons based on the age of each of the hidden neurons includes removing at least one hidden neuron for each class.

In some embodiments, determining an age for each of the hidden neurons is based on the activation of each of the hidden neurons, wherein an activation is based on a distance associated with one or more extracted features from one or more of the plurality of hidden neurons being less than a radius of the one or more of the plurality of hidden neurons.

In some embodiments, determining an age for each of the hidden neurons may comprise: determining, for each feature extracted, one or more activated hidden neurons; decrementing the age of each of the hidden neuron activated that are associated with an output neuron of an incorrect class; and incrementing the age of each of the hidden neurons activated that are associated an output neuron of a correct class.

In some embodiments, the method may further comprise: requesting, prior to removing one or more hidden neurons, a threshold from a user via a user interface; receiving, via a user interface, the threshold; and removing one or more hidden neurons is further based on a total number of hidden neurons exceeding a threshold.

In some embodiments, sampling the sensor data stream for a plurality of sensor data samples may comprise: generating training data samples from the sensor data stream, wherein the training data samples are a first portion of the sensor data stream for a first period of time, and wherein each of the training data samples are associated with a classification label; generating testing data samples from the sensor data stream, wherein the testing data samples are a second portion of the sensor data stream for the first period of time; and the plurality of sensor data samples is comprised of sensor data from the training data samples.

In some embodiments, the feature extractor comprises a convolutional neural network.

In some embodiments, a plurality of coefficients of the convolutional neural network of the feature extractor is randomly initialized.

In some embodiments, the method may further comprise operating, after training the classifier, the classifier on one or more features extracted from a second sensor data stream.

In accordance with some embodiments of the present disclosure, an example apparatus is provided. In some embodiments, the example apparatus may comprise at least one processor and at least one memory coupled to the processor, wherein the processor is configured to: sample a sensor data stream to generate a plurality of sensor data samples; extract, via a feature extractor, a plurality of extracted features from the sensor data samples; determine, via a classifier and based the extracted features, a detection of a new feature for one or more of the extracted features, wherein the classifier comprises at least an input layer of input neurons, a hidden layer of hidden neurons, and an output layer of output neurons, wherein each hidden neuron is associated with one output neuron, wherein each output neuron is associated with one class; train the classifier based on the plurality of extracted features comprising: add a new hidden neuron, wherein the new hidden neuron is associated with the new feature; determine an age for each of the hidden neurons; and remove one or more hidden neurons based on the age of each the hidden neurons.

In some embodiments, each sensor data sample of the sensor data samples includes a first plurality of dimensions; to extract a plurality of extracted features from the sensor data samples includes to extract a plurality of extracted features that includes a second plurality of dimensions; and the second plurality of dimensions is reduced from the first plurality of dimensions.

In some embodiments, to remove one or more hidden neurons based on the age of each of the hidden neurons the processor is further configured to remove at least one hidden neuron for each class.

In some embodiments, to determine an age for each of the hidden neurons is based on the activation of each of the hidden neurons, wherein an activation is based a distance associated with one or more extracted features from one or more of the plurality of hidden neurons being less than a radius of the one or more of the plurality of hidden neurons.

In some embodiments, to determine an age for each of the hidden neurons the processor is further configured to: determine, for each feature extracted, one or more activated hidden neurons; decrement the age of each of the hidden neurons activated that are associated with an output neuron of an incorrect class; and increment the age of each of the hidden neurons activated that are associated an output neuron of a correct class.

In some embodiments, the processor is further configured to: request, prior to removing one or more hidden neurons, a threshold from a user via a user interface; receive, via a user interface, the threshold; and wherein to remove one or more hidden neurons is further based on a total number of hidden neurons exceeding a threshold.

In some embodiments, to sample the sensor data stream for a plurality of sensor data samples the processor is further configured to: generate training data samples from the sensor data stream, wherein the training data samples are a first portion of the sensor data stream for a first period of time, wherein each of the training data samples are associated with a classification label; generate testing data samples from the sensor data stream, wherein the testing data samples are a second portion of the sensor data stream for the first period of time; and wherein the plurality of sensor data samples is comprised of sensor data from the training data samples.

In some embodiments, the feature extractor comprises a convolutional neural network.

In some embodiments, a plurality of coefficients of the convolutional neural network of the feature extractor is randomly initialized.

The processor is further configured to operate, after training the classifier, the classifier on one or more features extracted from a second sensor data stream.

The above summary is provided merely for purposes of summarizing some example embodiments to provide a basic understanding of some aspects of the disclosure.

### BRIEF SUMMARY OF THE DRAWINGS

Having thus described certain example embodiments of the present disclosure in general terms, reference will now be made to the accompanying drawings, which are not necessarily drawn to scale, and wherein:
FIGURE 1 illustrates an exemplary diagram for classifier learning/testing in accordance with one or more embodiments of the present disclosure;
FIGURE 2A illustrates exemplary feature spaces in a two-dimensional feature space in accordance with one or more embodiments of the present disclosure;
FIGURE 2B illustrates an exemplary feature space in accordance with one or more embodiments of the present disclosure;
FIGURE 3 illustrates an exemplary operation of splitting of sensor data in time in accordance with one or more embodiments of the present disclosure;
FIGURE 4 illustrates an example diagram of operations for classifier learning in accordance with one or more embodiments of the present disclosure;
FIGURE 5 illustrates an example diagram of operations for aging a hidden neuron in accordance with one or more embodiments of the present disclosure;
FIGURE 6 illustrates an example diagram of operations for removing one or more hidden neurons or classes in accordance with one or more embodiments of the present disclosure;
FIGURE 7 illustrates an example diagram of operations for determining a closest hidden neuron in accordance with one or more embodiments of the present disclosure; and
FIGURE 8 illustrates an example hardware diagram in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The use of the term "circuitry" as used herein with respect to components of a system or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry.

### OVERVIEW

Various embodiments of the present disclosure are directed to improved methods, apparatuses, systems, and computer programming products for artificial intelligence and/or machine learning, and more particularly for classifier learning for resource constrained devices.

Artificial intelligence is increasingly incorporated into apparatuses and/or systems that do not have large computational resources and/or large storage capabilities. Moreover, these apparatuses and/system have limited resources for which to utilize for artificial intelligence and machine learning. Despite their limited computational resources and/or storage capabilities, these apparatus and/or systems are being utilized to train neural networks and utilize the neural network on the apparatus and/or system. In various embodiments these may be tiny devices and/or sensors that lack computational resources or large amounts of memory. These resource-constrained apparatuses and/or systems are also increasingly being used in areas where access to the internet and/or cloud computing is not available and/or to achieve scalability in comparison to a centralized approach. Additionally or alternatively, apparatuses and/or systems are desired where time needed to communicate with cloud-based or network-based resources is not required, which is due to such time introducing lag into the processing of data. There is also a desire to utilize sensor data as it is generated to train the artificial intelligence and machine learning models. The real-time and streaming nature of utilizing sensor data also means that training or learning needs to occur on an apparatus and/or system without the use of remote network resources or cloud resources. This may be referred to as online training or online learning as the apparatus and/or system is trained on the apparatus or system and the large resources of, for example, cloud or too powerful systems are not used. Further, apparatus and/or systems utilizing these models continue to shrink in size and have fewer computing and memory resources available.

Apparatuses and/or systems in accordance with present disclosure use machine learning models of neural networks that may include an input layer, an output layer, and at least one hidden layer connecting the input layer to the output layer. Each of these layers may be comprised up of multiple neurons or nodes. The neural networks may be used in a classifier.

A classifier may receive an input and determine a class or classification of the input based on the connections between the neurons of each layer. For example, a smart watch may generate sensor data from accelerometers and/or gyroscopes that is used to determine a class of the type of activity that a user of the smartwatch may be engaged in (e.g., walking, running, standing, etc.).

The classic manner of training neural networks, including classifiers, does not consider the limitations of resource-constrained devices. Prior manners entail training or learning requiring storing large amounts of data and running complex procedures to determine and/or set the coefficients of a neural network. In addition to the size of the data used, the neural networks are large because they run through large numbers of iterations of training or learning, which is computationally very costly, and use backpropagation and/or stochastic gradient descent during the training or learning. In training neural networks this may cause the neural network to grow in size while also resulting in many portions of these neural networks (e.g., hidden neurons) being unutilized or underutilized. For example, such training may use a fixed amount of, among other things, hidden neurons that are associated with features and classes in a training set of data samples but that are otherwise not all used or not used enough during operation.

The present disclosure provides improvements that address the limitations of resource-constrained devices and systems. The present disclosure includes multiple improvements. For example, various embodiments in accordance with the present disclosure do not require network resources or connection to the internet. Additionally or alternatively, without requiring transmitting data over the internet or to another device or system, privacy is improved on as no data is required to be transmitted off of a device. Additionally or alternatively, energy consumption of devices and systems in accordance with the present disclosure may be reduce due to the more efficient and lower memory size of the neural networks utilized. Additionally or alternatively, speeds for classifier learning may be improved for an apparatus and/or system due to, among other things, not needing to transmit data off the device nor needing to iterate certain operations through large amounts of hidden neurons. Additionally or alternatively, speeds may be improved for classifier learning as various embodiments do not include or require backpropagation nor stochastic gradient descent.

In various embodiments in accordance with the present disclosure, classifier learning may include identifying, adding, and removing hidden neurons and/or classes. These additions or removals may increase or reduce the size of a classifier with respect to the maximum amount of storage allowed. The removal of hidden neurons may be based on an age of the hidden neuron related to how often the hidden neuron is activated by sensor data samples input into the neural network. Additionally or alternatively, the classifier learning may include determining only one hidden neuron for a input data in embodiments having a plurality of hidden neurons being activated by one input. Also, various embodiments may utilize one or more sampling operations for generating sensor data samples to allow a classifier to learn in real-time as sensor data is generated.

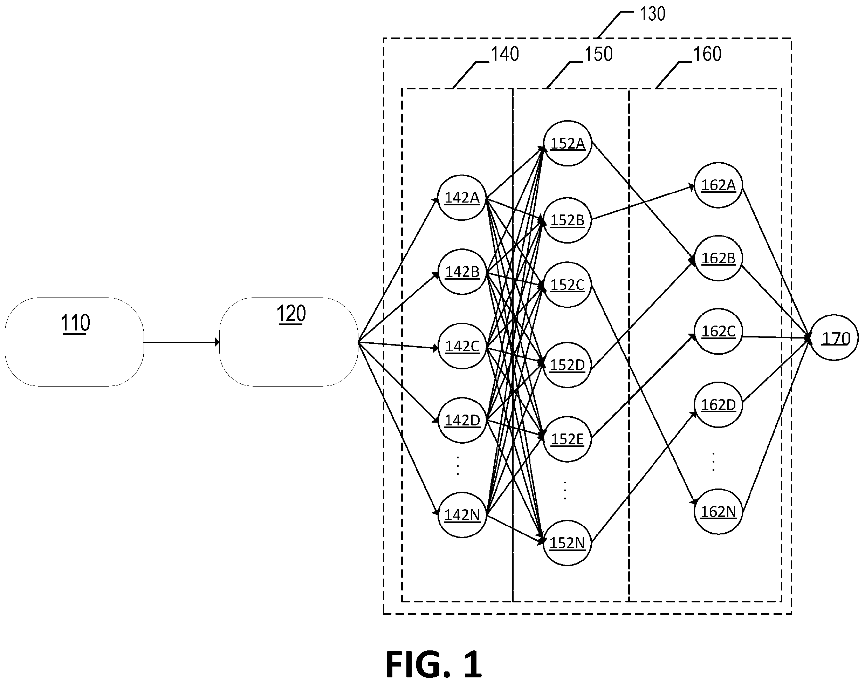

Figure 1 illustrates an exemplary flowchart for classifier learning/testing in accordance with one or more embodiments of the present disclosure. In various embodiments, such a flowchart may be referred to as a pipeline for how a data stream is generated and utilized for classifier learning/testing. As exemplified in Figure 1, the classifier includes at least one sensor or a plurality of sensors 110, a feature extractor 120, a classifier 130, and an output 170. The output 170 may be a class or classification associated with the sensor data generated by the sensor(s) 110.

In various embodiments, one or more sensors 110 may generate sensor data. The sensor data may be generated as time progresses, which may generate a stream of time varying sensor data. For example, a mobile device of a smartwatch may include a plurality of accelerometers and/or a plurality of gyroscopes that take measurements and generate sensor data over time. In another example, a sensor may be an environmental sensor, such as a temperature sensor that may take temperature measurements and generate temperature data over time. As the sensor data is generated, it may be transmitted to and received by one or more other components of an apparatus and/or system, such as by the processor or by artificial intelligence circuitry (also referred to as AI circuitry), which is described further herein. The sensor data may be received as stream, which may be referred to as a stream of sensor data. The stream of sensor data may be received in real-time and/or stored in a limited memory, such as in a buffer to use once a sampleable amount of sensor data is stored. The sensor data may be sampled continuously and/or selectively for various time periods to generate sensor data samples.

During classifier learning, the sensor data samples may comprise a plurality of dimensions. For example, a mobile device having a plurality of accelerometers and/or a plurality of gyroscopes may generate a stream of sensor data that has a plurality of dimensions associated with the number of types of sensors generating sensor data and the frequency of the sensor data. In an embodiment with three axis accelerometers and three axis gyroscopes with 100 Hz frequency there may be 600 (six hundreds) dimensions of data representing the combination of axes and magnitudes of measurements for each of the sensors for a time period of one second. Other embodiments may contain more or less dimensions.

The sensor data samples may be transmitted to a feature extractor 120. The feature extractor 120 may extract or determine a plurality of features from the sensor data samples. In various embodiments, the feature extractor 120 may extract one or more features and also reduce the dimensions of the sampled sensor data. The dimensions of the extracted features may be different from the dimensions (e.g., x-y coordinates) of the dimensions of the sensor data samples (e.g., magnitude and direction of acceleration of an accelerometer and/or rotation by a gyroscope). Thus, the feature extractor 120 may generate and/or convert the sensor data samples into a plurality of features represented by a plurality of dimensions. For example, a mobile device generating sensor data of 600 dimensions for one second may have the dimensions reduced by the feature extractor 120 to have 24 (twenty four) dimensions. Additionally or alternatively, the feature extractor 120 may also flatten the sensor data samples in extracted features. Such operations of reduction of dimensions and/or flattening of sampled sensor data may improve the performance for classifier learning as described herein, including by requiring less resources to perform the classifier learning. In various embodiments, a feature extractor 120 may be configured to extract as many features as there are input neurons 142A, 142B, 142C, 142D, ..., 142N in the input layer 140. The plurality of features extracted by the feature extractor 120 may be provided to the classifier 130.

In various embodiments, a feature extractor 120 may be comprised of a convolutional neural network. Alternatively, in various embodiments the feature extractor 120 may be comprised of a reservoir neural network. In various embodiments, the reservoir neural network may be an Echo State Network. The convolutional neural network and/or the reservoir neural network of the feature extractor 120 may be randomly initialized. Random initialization may include the coefficients of the neural network being randomly generated, such as with a uniform probability distributions, binomial probability distribution, or another probability distribution or combination of probability distributions. Alternatively, the neural network of the feature extractor 120 may be off-line trained. For example, the neural network of the feature extractor 120 may be trained by an artificial intelligence system (e.g., using backpropagation) not associated with the device and then loaded to the device. Large and more computationally complex systems may generate and optimize the convolutional neural network of the feature extractor 120 on the available training dataset for the feature extractor 120, and this convolutional neural network may be transmitted and loaded to the device for operation as a feature extractor 120. The feature extractor 120, once loaded, would processes sensor data consistently and not need to be retrained.

In accordance with various embodiments, a classifier 130 may include a plurality of layers.

In various embodiments, three layers may be used that include an input layer 140, a hidden layer 150, and an output layer 160. Each of the plurality of layers may include a plurality of neurons (e.g., reference 140 contains 142A,...,142N; reference 150 contains 152A,...,152N and reference 160 contains 162A,... ,162N etc.). Various embodiment may user hyperspherical classifiers. For example, embodiments may utilize a Restricted Coulomb Energy (briefly, RCE) classifier 130 having at least three layers of neurons. In various embodiments, a classifier may be referred to as a TinyRCE classifier.

The input layer 140 may include a plurality of input neurons 142, such as a first input neuron 142A, a second input neuron 142B, a third input neuron 142C, a fourth input neuron 142D, etc. until the last N-th input neuron 142N of the input neuron layer 140. In various embodiments, the total number of input neurons 142 may total the number of dimensions of the features extracted by the feature extractor 120. Each of the input neurons in the plurality of input neurons 142 may be associated with each of the plurality of hidden neurons 152 of the hidden layer 150. The association may be with a coefficient, which is represented in Figure 1 by a connecting line from an input neuron (e.g., 142A) to a plurality of hidden neurons (e.g., 152A, 152B, 152C, 152D, 152E, ..., 152N), which may be in one or more hidden layers. In various embodiments, the coefficient may be a value, such as a positive number. Alternatively or additionally, a coefficient may be zero, which may represent that the input neuron (e.g., 141A) is not connected with a specific hidden neuron. The hidden layer 150 may include a plurality of hidden neurons 152. The hidden layer 150 may not be visible outside of the neural network of the classifier 130 as that the hidden layer 150 only interacts with other layers of the neural network of the classifier 130. Each of the hidden neurons 152 of the hidden layer 150 may be associated with each of the input neurons 142 of the input layer 140. In various embodiments, each of the hidden neurons 152 is associated with only one of the output neurons 162 of the output layer 160. For example, hidden neuron 152B is associated with only output neuron 162A. In various embodiments, more than one hidden neuron (e.g., 152A and 152D) may be associated with a single output neuron (e.g., 162B). The number of hidden neurons 152 in the hidden layer 150 may vary over time, such as through the addition or removal of hidden neurons 152 as described herein.

In various embodiments not illustrated, there may be more than one hidden layer 150 in the convolutional neural network of the feature extractor 120 and/or the classifier 130. For example, there may be a first hidden layer and a second hidden layer. Each of the hidden neurons of the first hidden layer may be associated with each of the hidden neurons of the second hidden layer. Additionally or alternatively, various embodiments might include more than one association between the hidden neurons of the hidden layer associated with the output layer and the output neurons of the output layer.

The output layer 160 may include a plurality of output neurons 162. The output neurons 162 may be associated with one or more of the hidden neurons 152 such that each hidden neuron 152 is associated with only one of the output neurons 162. In various embodiments, the output neurons 162 may be OR output neurons 162. For OR output neurons 162, only one of the OR output neurons 162 may activated at a time and, thus, only one may be used by the classifier 130 to determine a single class associated with a feature of an input neuron 142. The output neurons 162 may be associated with the output 170 such that the activated output neuron 162 may provide its associated class to the output 170. Thus, when a hidden neuron 152 is activated by the input to an input neuron 142 and activates the output neuron 162, the activated output neuron 162 will provide its class to the output 170. In various embodiments, a feature extracted may activate two or more hidden neurons 152 which may be associated with two or more output neurons. In such embodiments, and as described herein, a determination of a closest hidden neuron 152 may be used to determine the correct hidden neuron 152 to be activated.

In various devices and/or systems, the classifier 130 may be trained by classifier learning on the apparatus and/or system. This on device and/or on system training may be referred to as online training or online learning because the classifier 130 is trained on the device and/or system. In contrast, offline training or offline learning may refer to a neural network trained off the device and/or system, such as by servers with large storage and computing capabilities.

In various embodiments, the neural network of the feature extractor 120 may be combined with the neural network of the classifier 130. In such embodiments the neural network may include extracting the features from the sampled sensor data and determining a class with the same neural network.

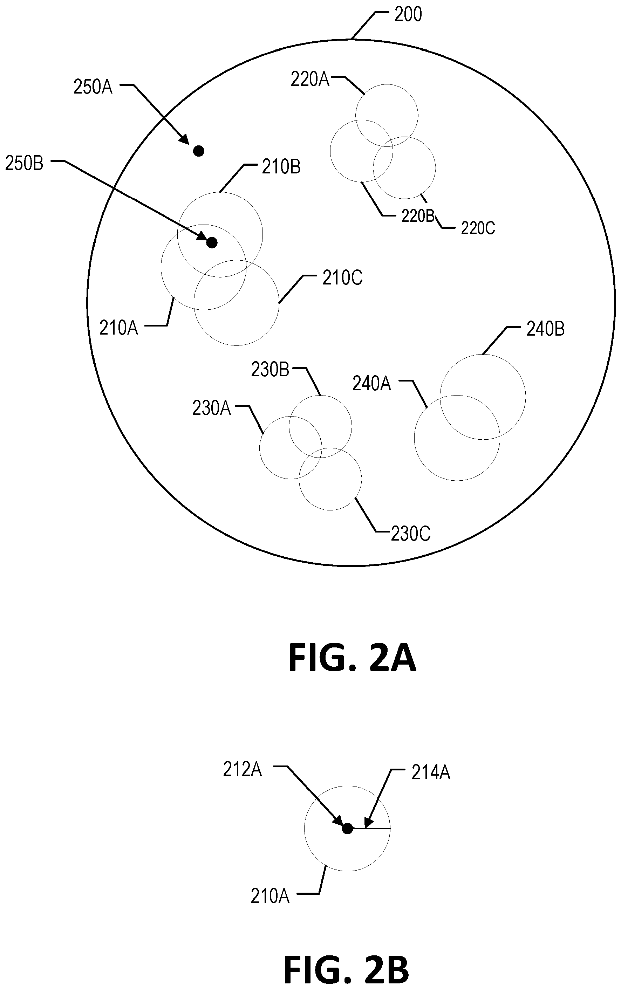

Figure 2A illustrates exemplary feature spaces in a two-dimensional feature space in accordance with one or more embodiments of the present disclosure. In various embodiments, the extracted features from the feature extractor 120 may be depicted in a two-dimensional space 200. The two-dimensional space 200 may be depicted with a plurality of feature spaces (e.g., 210, 22, 230, 240) representing regions of influence associated with hidden neurons 152. The plurality of feature spaces may be grouped into one or more groupings. Each grouping may be associated with one class of a plurality of classes of the output neurons 162. For example, and as depicted in Figure 2A, the two-dimensional space 200 may include a first grouping of feature spaces 210, a second grouping of feature spaces 220, a third grouping of feature spaces 230, and a fourth grouping of feature spaces 240. Each of the groupings of features spaces (e.g., 210, 220, 230, and 240) may be associated with a respective output neuron of the output layer and, thus, a class.

Figure 2B illustrates an exemplary feature space in accordance with one or more embodiments of the present disclosure. In particular, Figure 2B illustrates only one feature space 210A to further illustrate the center or center point 212A and the radius 214A. Each feature space may be associated with a center 212A, which may be used in determinations or measurements of a distance from the center 212A of a feature space 210A to the dimensions of a feature (e.g., 250A, 250B) input to the classifier 130. As illustrated in Figure 2A, the dimensions of a feature may be located outside of a feature space (e.g., 250A) or inside a feature space 210A (e.g., 250B). As exemplified in Figure 2B, the determination of whether the dimensions of a feature are outside or inside a feature space may be determined if the distance from the center (e.g., 212A) of feature space (e.g., 210A) to the dimensions of the feature (e.g., 250A, 250B) are less than or greater than the radius (e.g., 214A) of the feature space (e.g., 210A).

For example, a classifier 130, through its neural network and based on the features input to the input neurons 142 of the input layer 140, may determine and an output of a class. Each of the coefficients of the neural network determined during a classifier learning may operate to determine how the extracted features, particularly the dimensions of the extracted features, are associated with a class via the neural network of the classifier 130. In various embodiments, the hidden neurons 152 of the hidden layer 150 may each comprise or be associated with a region of influence or feature space. The region of influence may be based a value for each dimension of the feature represented by the hidden neuron 152, which may determine a center 212A, and a radius 214A that extends from the center 212A. For example, a two-dimensional feature space may be illustrated as a circle (e.g., 210) having a radius 214A extending from a center point 212A. The center point is associated with the value of each dimension (e.g., x coordinate and y coordinate) of the feature of a hidden neuron 152. This feature space is the region of influence identifying the dimensional coordinates of other features that may be in sensor data samples that may be identified as activating the hidden neuron 152. For example, a feature having the dimensions represented by 250A would not activate any of the feature spaces illustrated in Figure 2A. In contrast, a feature input into the classifier 130 having the dimensions represented by 250B would be included in feature space 210A and feature space 210B. By determining if the dimensional coordinates of a feature extracted by the feature extractor 120 are within a region of influence of a hidden neuron 152 then the classifier 130 may determine a hidden neuron 152 that is to be activated and, thus, the associated output neuron 162 that identifies a class. How to determine the activated hidden neuron 152 when there is an overlap in feature spaces is described further herein.

A mobile device may (e.g., a smartwatch) is used to determine an activity of a user. The activities a user may engage in may be associated with classes, such as a class for walking, a class for running, a class for lying, and a class for standing. Sensors 110 in the mobile device generate sensor data. The sensor data is sampled and a feature extractor 120 extracts features from the sensor data samples. The feature extractor 120 may also reduce the features extracted from the sensor data to a two-dimensional feature set. In this manner, a time-series of sensor data samples may be converted into two-dimensional features (e.g., a x value and a y value in a two-dimensional x-y coordinate system). The features may be provided to a classifier 130. Each input neuron 142 of the input layer 140 of the classifier 130 may be associated with a different feature of the extracted features input into the classifier 130. The classifier 130 iterates through each input neuron 142 to determine the hidden neuron 152 activated. Based on the features and the coefficients of the neural network of the classifier 130, different hidden neurons 152 of the hidden layer 150 of the classifier 130 may be activated and a class may be determined. Thus, the mobile device is able to be determine the activity of the user based on the sensor data generated by the sensors.

The activation of a hidden neuron 152 may be determined based on a distance of the dimensions of a feature from the features space of a hidden neuron 152. This may include determining a multi-dimensional distance between the feature and every hidden neuron 152 being determined. In various embodiments with binary values, a Hamming distance may be used with binary values. In various features spaces with real values, Euclidean distances may be used.

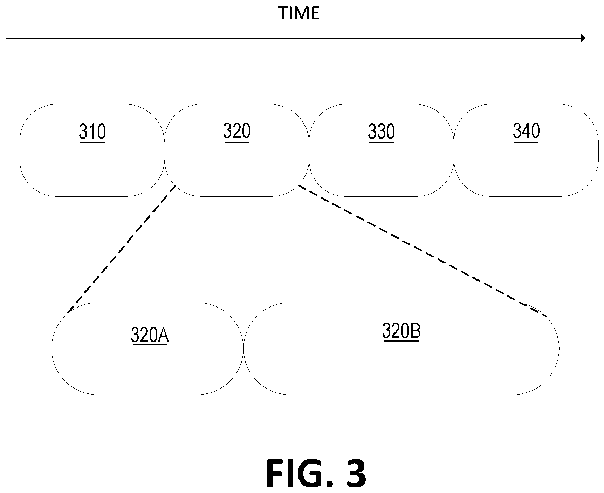

Figure 3 illustrates an exemplary splitting of sensor data in time in accordance with one or more embodiments of the present disclosure. One or more data streams of sensor data may be generated and/or received by one or more sensors. The data stream may be sampled at various intervals to chunk the data of the data stream.

The data stream is sampled to generate a plurality of data samples, such as sample 310, sample 320, sample 330, sample 340, etc. In various embodiments, the plurality of data samples may be time stamped. One or more of these data samples utilized for classifier may be further sampled to generate a training sample set of training data samples and a testing sample set of testing data samples. For example, a sample 320 may be used to generate a cluster of sensor data as a training sample 320A of training data samples and a cluster of sensor data as a testing sample 320B of testing data samples. For example, the cluster of sensor data in training sample 320A may be 20% of sample 320 and the cluster of testing sample 320B may be 80% of sample 320. The classifier learning may be based on the sensor data in the training sample 320A. After classifier learning trains a classifier based on a training sample 320A then the testing sample 320B may be used in an operating mode to test the classifier. The operating mode that may utilize the testing sample 320B may test the trained classifier to determine if the training was successful and the classifier is able to determine the classes associated with the sensor data in the testing sample 320B. The testing and training may be performed iteratively for subsequent samples of the data stream. In various embodiments, each of the training data samples may be associated with one or more classes and/or classification labels. In various embodiments, each of the testing data samples may not be associated with a class and/or classification label. In various embodiments, classification labels for data samples may be determined as described herein. In various embodiments, the training data samples may be used during a learning phase or a training phase. In various embodiments, the testing data samples may be used during a testing phase.

In various embodiments, the one or more sensors 110 may generate an amount of data that may allow for classifier learning in real time. The data stream may be a temporal stream of data from the one or more sensors such that data is acquired in temporal order. Real-time processing may occur when the processing of a sensor data samples in a training sample may be used for classifier learning that takes less time to occur than to reach the next chunk or sample of sensor data. Alternatively, the data stream may be sampled and sensor data may be stored for classifier learning at a later time subsequent to the sampling of the data stream. In various embodiments, the amount of sensor data to store for later classifier learning may be based on a sensor data storage threshold. In an exemplary embodiment, the sensor data storage threshold may allow for the storage of 50 to 100 (fifty to one hundred) seconds of sensor data that may be used to classifier learning, including being sampled for training data samples and testing data samples. Storing sensor data for later classifier learning may allow for a user to provide classification identifiers or labels at a later time. For example, if a user is actively involved in an activity (e.g., running), the user may not be available to provide a classification identifier or label while engaged in the activity but could provide it at a later time.

It should be readily appreciated that the embodiments of the methods, apparatuses, systems, and computer programming products described herein may be configured in various additional and alternative manners in addition to those expressly described herein.

### EXEMPLARY METHODS

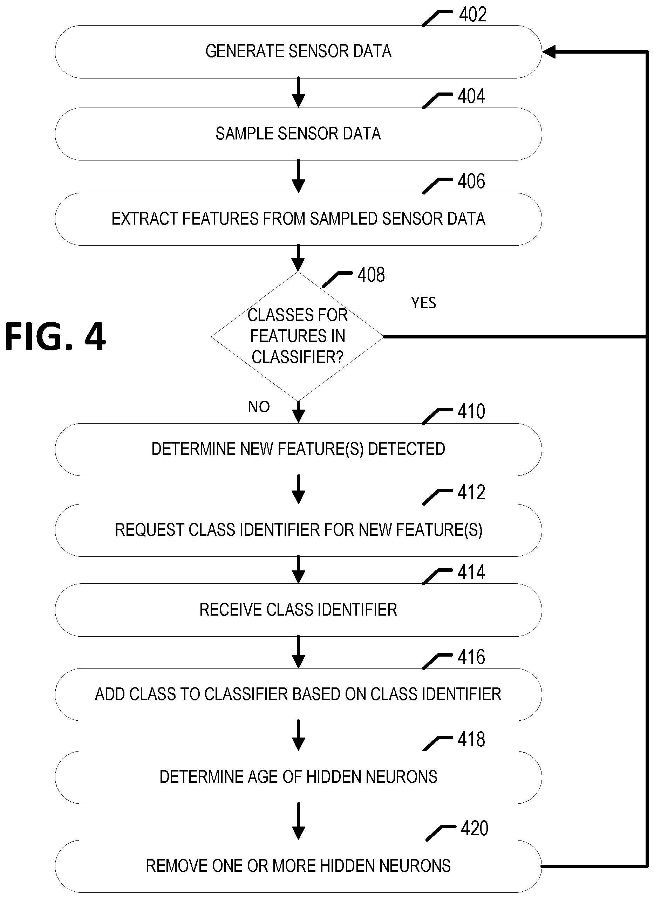

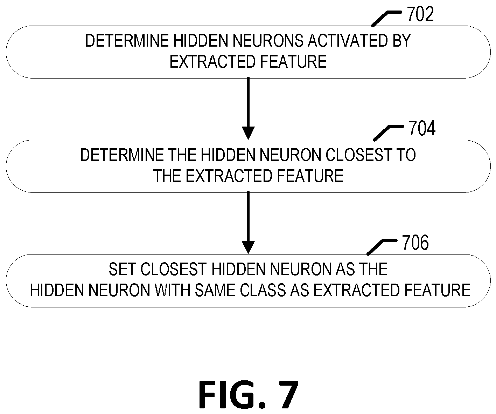

Embodiments of the present disclosure herein include methods, apparatuses, systems, and computer program products for performing one or more operations for classifier learning and/or training a classifier. The operations described herein may also be applicable to regressor learning as well as to let a neural network predict measurements when such a measurement otherwise exceeds the capabilities of a sensor device. In various embodiments, one or more of the operations described herein may be performed during a learning phase. Additionally or alternatively, one or more operations described herein may be performed during a testing phase. In an exemplary embodiment, one or more operations described in association with Figures. 4-6 may be performed during a learning phase and one or more operations described in association with Figure 7 may be performed during a testing phase.

In accordance with the present disclosure, a classifier 130's neural network may be optimized by reducing the size of the hidden layer 150 of the neural network as the classifier 130 is trained, including as the neural network incorporates new classes. The hidden layer 150 may be reduced by removing hidden neurons 152 that are not utilized or comparatively underutilized. Additionally or alternatively, hidden neurons 152 that are redundant of other hidden neurons 152 may be removed. Additionally or alternatively, the feature space associated with hidden neurons 152 may be reduced.

Figure 4 illustrates an example diagram of operations for classifier learning in accordance with one or more embodiments of the present disclosure.

At operation 402, sensor data is generated. Sensor data may be generated by one or more sensors 110 in or associated with an apparatus and/or system. For example, a mobile device, such as a wearable watch, may include a plurality of accelerometers and gyroscopes that may be used to generate data. In another example, a temperature sensor may generate temperature data. In another example, a mobile device may generate GPS data from a GPS sensor. Sensor data may be generated over time to create a data stream.

In various embodiments, a data stream may be analyzed in real-time, which may include being analyzed without loss of any sample(s) during the performance of further operations described herein. To the extent there may be unknown features in the sensor data, such unknown features may be stored for later. For example, the storing of sensor data may be based on waiting to receive input, such as from a user via a user interface, regarding a class to be associated with one or more features. In various embodiments, the sensor data may be stored in memory. In various embodiments, sensor data may be transmitted and received by one or more components of the device from the one or more sensors. The received sensor data may then be sampled, such as during classifier learning.

At operation 404, the sensor data is sampled. The sampling of sensor data may include receiving sensor data generated by a sensor 110 as a data stream or for a time period and creating a train sample and a test sample as described herein. Such train samples and test samples may be utilized during classifier learning to train a classifier and/or test a trained classifier. Each train sample and test sample may be comprised of a plurality of sensor data samples.

At operation 406, features may be extracted from sensor data samples. In various embodiments, a feature extractor 120 may extract the features from the sampled sensor data (e.g., sensor data samples). In extracting the features, the feature extractor 120 may also reduce the dimensionality of the sensor data samples. In an exemplary embodiment of a mobile device with six sensor generating sensor data, the dimensionality may be reduced to 24 dimensions that may associated with and/or represented in an imaginary two-dimensional coordinate space.

At operation 408, if classes for the features are in the classifier is verified. The classifier 130 is utilized to determine a class for each of the extracted features or, alternatively, that a class does not exist for one or more features. If the extracted features are associated with existing classes the classifier has already learned or been trained to determine then the classifier learning may end or new sensor data may be used for further classifier learning (e.g., proceed to operation 402). Alternatively, if it is determined that there are one or more classes that are not existing in the classifier 130 or that a class cannot be determined for a feature, then the classifier learning may proceed to operation 410.

At operation 410, it is determined that new feature(s) have been detected. Detecting the determination of new features may be done by the classifier not being able to determine a class for one or more extracted features. The feature(s) at an input neuron 152 associated with the input associated with a new class are determined so that a class identifier may be requested to be associated with these feature(s).

At operation 412, a class identifier for the new feature(s) is requested. In various embodiments, the request for a new class may be request a user to provide a new class. In various embodiments, such as a wearable mobile device (e.g., a smartwatch), a notification for a new class may be generated and the notification for the new class may be rendered on a user interface. The rendering of the notification for the new class may include, among other things, an identification of one or more features associated with the new class. In various embodiments with a command line interface, a request for a class identifier may be with a message and a command line prompt. In various embodiments with serial communication, request may be sent serially.

At operation 414, a class identifier may be received. The class identifier may specify a name for a new class and/or include a selection of an existing class. In various embodiments of wearable mobile device, the identifier may be a name for the new class (e.g., running, walking, jogging, lying, standing, etc.). Alternatively or additionally, the identifier may be a selection of an image from amongst a set of images, where each of the images may be associated with a predetermined class. For example, and image of a runner, a walker, a person lying down, or a person sitting down.

At operation 416, a class may be added to classifier based on the class identifier. This may include adding a new class at a new output neuron 162. Alternatively or additionally, this may include adding a new hidden neuron 152 associated with the feature(s) and adding a connection to an existing output neuron 162 associated with an existing class. Thus the features may be associated with the identifier received and the previously unassociated feature(s) extracted and applied to the classifier will have a class associated with the new feature(s).

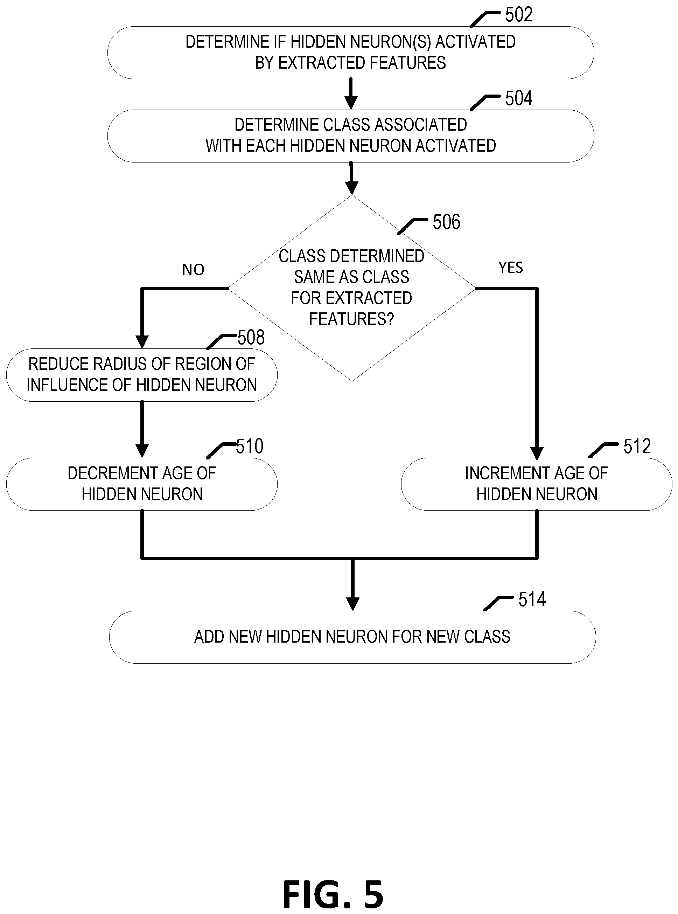

At operation 418, the age of hidden neurons 152 may be determined, which is described further herein, including in association with Figure 5. After determining the age of the hidden neurons 152, the classifier learning may proceed to operation 420.

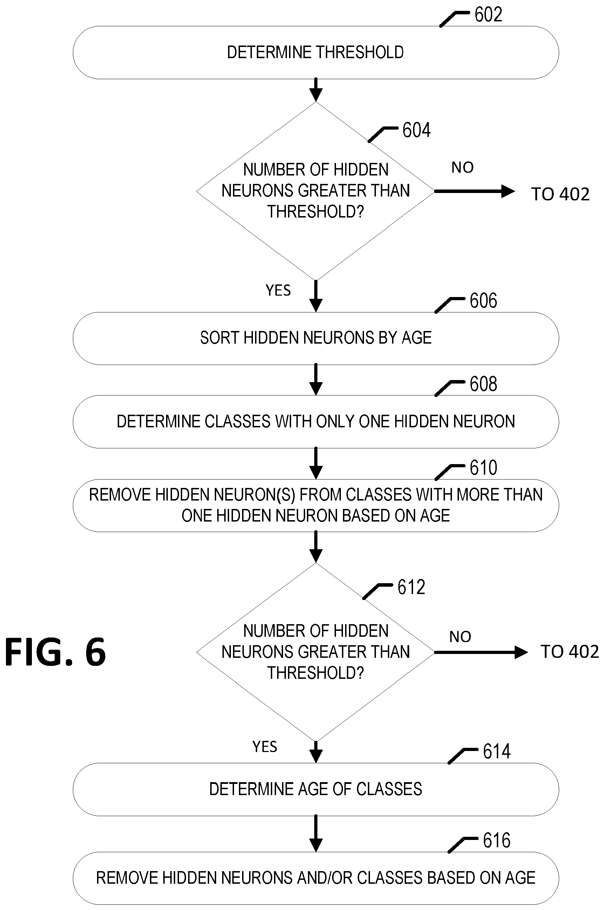

At operation 420, one or more hidden neurons 152 may be removed, which is described further herein, including in association with Figure 6. In various embodiments, and as described further herein, if the number of hidden neurons is below a threshold then no hidden neurons 152 are removed and the classifier learning may proceed to another iteration of classifier learning may occur (e.g., proceed to operation 402) or, alternatively, classifier learning may end. In various embodiments, after one or more hidden neurons 152 are removed, then similarly another iteration of classifier learning may occur or classifier learning may end.

To determine which hidden neurons 152 to remove, the hidden neurons 152 may be assigned an age or age score. During classifier learning, every time a hidden neuron 152 is activated it may be aged, including either decrementing the age or incrementing the age. Then the hidden neurons 152 with the highest age or highest age score are determined to be activated more often and, thus, should be kept. In contrast, the hidden neurons 152 with the lower age or age score are determined not to be used and, thus, may be removed. An age or an age score may be based on decrements and/or increments, including an age or age score being negative (i.e., below zero) if sufficiently decremented. The hidden neurons 152 removed provide the opportunity to add new hidden neurons 152 that may have an increased age, such as in testing sessions.

Figure 5 illustrates an example block diagram of a flowchart of operations for aging a hidden neuron in accordance with one or more embodiments of the present disclosure. As the extracted features input into the classifier 130 have been determined to each be associated with a class (e.g., at operations 408 or 416) the classifier 130 may determine which hidden neurons 152 are associated with which features input in the input neurons 142 and the associated hidden neuron(s) 152 activated. During classifier learning the neural network of the classifier receives new sensor data samples. The sensor data samples have their features extracted and provided to the classifier 130. Based on the features, one or more hidden neurons 152 are activated, which may include hidden neurons 152 not associated with the class associated with the feature. The determination of an age or age score may allow for the classifier learning to determine the correct hidden neurons 152 a feature and a class. This may occur for each of the extracted features that is input into the input neurons 142 of the input layer 140.

At operation 502, the hidden neuron(s) activated by the extracted features is determined. New sensor data samples have their features extracted, which are input into the classifier 130. During classifier learning, the classifier 130 then determine each of the hidden neurons activated for each of the extracted features. In other words, for each input neuron 142, it is determined which hidden neurons 152 are activated.

In various embodiments, the hidden neurons activated may be associated or may not be associated with the class of the extracted features. For example, the extracted features may activate a first hidden neuron of a classifier and a second hidden neuron of the classifier, and each of the first hidden neuron and the second hidden neuron may be associated with separate classes.

In various embodiments, such as an embodiment with a two dimensional feature space, each hidden neuron may have a region of influence represented by a circle, such as illustrated in Figure 2A. Determining if a hidden neuron is activated may include if the two dimensional feature value of an input data (e.g., 250B) is inside a feature space one or more of the hidden neurons 152 of the classifier (e.g., 210A, 210B). For example, the distance of the two-dimensional feature value to the center of the feature space of each of the hidden neurons 152 may be determined. Then the respective radius of each respective feature space of each of the respective hidden neurons 152 may be used to if the input data is inside the feature spaces. This may be determined, for example, by determining if the distance is less than a radius of a feature space.

At operation 504, the class associated with the hidden neuron(s) activated is determined. The class for each of the hidden neurons 152 activated is determined. This class may the same as the class associated with the feature(s) in the input neurons 142 or it may be different.

At operation 506, it is determined if the class determined for the hidden neuron is the same as the class for the extracted features. If the class is different, which would be a misclassification, then the classifier learning may proceed to operation 508. If the class if the same, which would be a correct classification, then the classifier learning may proceed to operation 512. Thus, for a misclassification of an incorrect class, which is where the output neuron is different from a ground truth label, a radius may be reduced and an age decremented; and for a correct classification of a correct class, which is where the output neuron is the same as the ground truth, an age may be incremented.

At operation 508, and if the class determined is not the same as the class for the extracted features, the feature space of the activated hidden neuron 152 is reduced by reducing radius. As there is a difference between the class of this hidden neuron 152 activated and the class of the extracted features, the radius of the feature space of this hidden neuron 152 is too large to correctly identify the correct class. To reduce the radius of the feature space may improve subsequent iterations of determining classes with the classifier 130 by preventing incorrect determinations of classes.

At operation 510, and if the class determined is not the same as the class for the extracted features, the age of the hidden neuron is decremented. As there is a difference between the class of the hidden neuron 152 activated and the class of the extracted features, the hidden neuron 152 activated was not associated with the correct class referred to as a ground truth. Thus the age of the hidden neuron 152 is decremented.

At operation 512, and if the class determined is the same as the class for the extracted features, the age of the hidden neuron is incremented. As there is no difference between the class of the hidden neuron activated and the class of the extracted features-in other words the classes match, the hidden neuron activated was associated with the correct class. Thus the age of the hidden neuron is incremented. In various embodiments, the reducing or radius and decrementing and/or incrementing of ages is performed during classifier learning.

In various embodiments, the decrementing and/or incrementing of the age of a hidden neuron may be flat value or may be a ratio. For example, a flat value of one may be used for the decrementing or incrementing. Alternatively, a ratio may be used for the decrementing or incrementing. In various embodiment, the ratio may be based on the distance of the extracted features from the center (e.g., 212A) and the radius (e.g., 214A) of the feature space of a hidden neuron 152.

The values of decrementing the age may be expressed as: ${age}^{t + 1} = {age}^{t} - \frac{distance}{radius}$

The value of incrementing the age may be expressed as: ${age}^{t + 1} = {age}^{t} + \frac{distance}{radius}$

For example, in an embodiment with a two-dimensional feature space, each hidden neuron may have a feature space represented by a circle, such as illustrated in Figure 2A. An extracted feature from sensor data samples may be associated with two-dimensional feature value (e.g., 250B), and this two-dimensional feature value may be inside the feature spaces of a plurality of hidden neurons (e.g., 210A, 210B), which may or may not overlap. Such overlaps may also be of feature spaces of hidden neurons 152 associated with different classes. In such embodiments, the two-dimensional value of the extracted feature may be associated with two or more hidden neurons. The distance of the two-dimensional feature value to the center 212A of the feature space each of the hidden neurons may be determined. Then the radius 214A of each feature space of each of the hidden neurons may be used to determine a ratio of how close the extracted feature is to each of the activated hidden neurons 152, which may be referred to as a distance. This ratio may be: $\frac{distance}{radius}$

The smaller this ratio for a hidden neuron, the closer the extracted feature is to a hidden neuron. How close an extracted features is may determine how to increment or decrement a plurality of hidden neurons.

In various embodiments where a feature may be located inside two or more feature spaces of hidden neurons 152 that are all associated with the same class, only one hidden neuron that is closest may be incremented and the others will be decremented.

The decrementing and incrementing of the age of hidden neurons may be utilized to associate each hidden neuron 152 with an age. If a hidden neuron 152 was not activated, then that hidden neuron may keep the same age without a decrement or an increment. In various embodiments, the age of a hidden neuron 152 may, prior to the operations of Figure 5, be set to a value. For example, an age of each hidden neuron may be set to zero or another value.

As the determination of an age of hidden neurons 152 requires there to be a hidden neuron 152 to be age, if there are new classes added where a hidden neuron 152 has not yet been added to the classifier 130, such as in accord with the operations of Figure 4, then a new hidden neuron 152 may be added for a new class. In various embodiments, this may have been a new class identified by a user or received by the apparatus and/or system performing the classifier learning.

At operation 514, a new hidden neuron for a new class is added. The addition of a new hidden neuron may include providing the new hidden neuron 152 an age. In various embodiments it may be desired not to remove a newly added hidden neuron 152 even if it has a low age, which may or may not be a lowest age among the hidden neurons 152. For example, a hidden neuron 152 may have an age set to a value that would be the same as other, already existing, hidden neurons 152 were set with, such as 0. Alternatively or additionally, a newly added hidden neuron 152 may be associated with an new hidden neuron identifier. The new hidden neuron identifier may be used during classifier learning to identify the new hidden neuron 152 and prevent it from being removed during one or more operations described herein even though the new hidden neuron 152 may have a low or the lowest age. Thus the new hidden neuron 152 may not be considered for removal.

Figure 6 illustrates an example diagram of a operations for removing one or more hidden neurons and/or classes in accordance with one or more embodiments of the present disclosure.

At operation 602, a threshold is determined. This threshold may be a threshold for the number of hidden neurons 152 for the classifier to utilize. In various embodiments, the threshold may be a total number of hidden neurons 152 the classifier 130 may be able to include for a device, which may any newly added hidden neurons 152. The threshold may set by a user and/or based on the available resources of a device and/or system. In various embodiments, a user may provide the threshold via a user interface. Such a threshold may be received in response to a request to the user to provide input such as described herein. The threshold may be provided by a user previously and stored in the system. Alternatively or additionally, the threshold may be determined based on the available resources of the device and/or system. For example, it may be based on a value of storage or memory available and/or dedicated to the classifier. This may be a flat value or a percentage value. This may also be a static value and/or a dynamic value that may change as resources may change over time. In various embodiments, the threshold may be determined based on a length or count associated with the number of hidden variables.

At operation 604, it is determined if the number of hidden neurons is greater than the threshold. If the number of hidden neurons 152 is not greater than the threshold then it may be determined that no hidden neurons 152 need to be removed before the classifier learning may proceed to the next sensor data samples (e.g., operation 402). In various embodiments, this may end the classifier learning. If the number of hidden neurons is greater than the threshold then the classifier learning may proceed to operation 606.

In various embodiments, the threshold may be associated with a number of hidden neurons 152 per class. For example, there may be a total of 300 hidden neurons 152 for 5 classes and a threshold of 200 may be determined. This threshold of 200 may be utilized to determine a difference of 100 between the total of 300 hidden neurons and the threshold of 200, which per class is a difference of 20 hidden neurons 152, which may also be referred to as a per class difference. The per class difference of 20 may be used to determine that 20 hidden neurons 152 are to be removed from each of the 5 classes to meet the threshold of 200 hidden neurons 152. In this embodiment, which hidden neurons 152 to remove per class may be determined by the age of the each of the hidden neurons 152 for each class and then removing the per class difference for each class. In various embodiments, the age of each class may be processed separately and a per class threshold to use for processing each class separately may be set the per class difference.

At operation 606, the hidden neurons may be sorted by age. The sorting of the hidden neurons 152 by age may generate a ranking of or may rank the hidden neurons 152 by age, which may be done for each class separately. This may, based on the sorting, allow for quick determination of the hidden neurons 152 with low ages and the hidden neurons 152 with high ages, which may be done for each class separately. In various embodiments, the high ages will be the hidden neurons 152 with greater numbers of activations and the lower ages will be the hidden neurons 152 with lower number of activations. It will also be appreciated that various embodiments could use an age such that high ages would be lower activations and low ages would be higher activations by modifying operations described herein.

At operation 608, classes with only one hidden neuron are determined. As the removal of a hidden neuron 152 for a class with only one hidden neuron 152 would result in the removal of the class, the identification of such hidden neurons 152 may be used to protect or keep classes when the removal of other hidden neurons 152 may not result in a class being removed. In various embodiments, the determination may be based on a hidden neuron 152 being associated with a new hidden neuron identifier or not.

At operation 610, hidden neurons from classes with more than one hidden neuron are removed based on age. For the classes identified as having more than one hidden neuron 152, the removal of a hidden neuron 152 will not remove the class. In various embodiments, operation 610 will remove a hidden neuron 152 with the lowest age.

In various embodiments, multiple hidden neurons 152 may be removed. The removal of multiple hidden neurons 152 may be performed by iterating one or more operations of Figure 6. Alternatively or additionally, a number of hidden neurons 152 to remove may be determined based on the number of hidden neurons 152 greater than a threshold. In an exemplary embodiment, the removal of multiple hidden neurons 152 may occur for each class based on a per class difference indicating a number of hidden neurons 152 to remove from each class to reach a threshold. Then, such as at operation 610, the classifier learning may remove the number of hidden neurons 152 to remove.

In various embodiments, after removing one or more hidden neurons 152 from classes with more than one hidden neuron 152 the number of hidden neurons may still be greater than the threshold. Then the classifier learning may determine one or more classes to remove by removing one or more hidden neurons 152 associated with the classes with only one hidden neuron.

At operation 612, and after removing one or more hidden neurons from classes with more than one hidden neuron, it is determined if the number of hidden neurons is greater than the threshold. If the number of hidden neurons 152 is not greater than the threshold then it may be determined that no further hidden neurons 152 need to be removed and the classifier learning may proceed to the next sampled sensor data. This may include further classifier learning. In various embodiments, this may end the classifier learning. If the number of hidden neurons 152 is greater than the threshold then the classifier learning may proceed to operation 614.

At operation 614, the age of classes may be determined. The determination of age of classes may be based on the ages of the hidden neurons 152 associated with a class. Determining the age of a class may determine activation of the class and, thus, which classes should be kept and/or which classes should be removed. In various embodiments, the determining an age of a class may be omitted.

At operation 616, hidden neurons and/or classes are removed based on age. This may utilize the sorting of hidden neurons 152 based on age. Alternatively or additionally, this may utilize a similar sorting of classes based on age (an operation not illustrated in Figure 6). The hidden neurons 152 and/or classes with the lowest ages may be removed.

In various embodiments where one hidden neuron 152 is removed at a time, the operations of Figure 6 may be performed iteratively to continue to identify and sort hidden neurons and/or classes. For example, in a first iteration a class with two hidden neurons 152 may have one hidden neuron 152 removed and, thus, in a subsequent iteration of operations this class and/or the hidden neurons 152 for this class may not be associated with one or more of the operations of Figure 6 (e.g., operation 610).

Figure 7 illustrates an example diagram of operations for determining a closest hidden neuron 152 in accordance with one or more embodiments of the present disclosure. In embodiments where an extracted feature input to an input neuron 142 of the classifier 130 may be determined to be within feature spaces of a plurality of hidden neurons (e.g., 152A and 152B), the closest hidden neuron (e.g., 152A) may be the hidden neuron 152 determined to be activated and have a class the same as the extracted feature. The determination of a closest hidden neuron 152 may be determined during a testing phase.

For example, the dimensions of an extracted feature may be determined to be in the region of influence of more than one hidden neuron 152. This may occur, for example, if there are features associated with too many classes that overlap, collide, or collapse with each other. In the two-dimensional examples illustrated in Figure 2A this may be found where the feature spaces of two hidden neurons overlap, such as with 210A and 210B. In such instances a single hidden neuron will be determined to be associated with the feature of the sampled sensor data and share a class with the extracted feature. This single hidden neuron 152 may be determined based on distance. For example, while there may be two or more feature spaces (e.g., 210A, 210B) of hidden neurons (e.g., 152A, 152B) that may contain the dimensions of the extracted feature, there will be only one hidden neuron 152 that is the closest to the dimensions of the feature.

At operation 702, the hidden neurons activated by an extracted feature are determined. The hidden neurons activated by an extracted feature may be determined based on the distance of the dimensions of the extracted feature to the centers of the feature spaces as described herein.

At operation 704, the hidden neuron closest to the extracted feature is determined. Of the plurality of hidden neurons activated, one will be the closest. In various embodiments, this may be determined by which hidden neuron has the least amount of distance to the center of a region of influence of each of the activated hidden neuron. Alternatively or additionally, the closest hidden neuron may be determined by a ratio of the radius (e.g., 214A) of each of the hidden neurons 152's feature spaces by the respective distance from the feature to the center of the feature space of the respective activated hidden neuron. The hidden neuron associated with the higher ratio may be determined to be the closest hidden neuron.

In various embodiments this may be done by creating a ratio of the radius of the hidden neuron 152 and the distance. This ratio may be a score determined for each hidden neuron 152, and this score may be tracked. After the score for each of the activated hidden nodes 152 has been determined, the hidden neuron 152 associated with the highest score is determined. In various embodiments, the hidden neuron 152 with the highest score may be considered the most reliable because it may be the closest hidden neuron 152. By dividing the radius of the hidden neurons 152 by the distance the hidden neurons 152 larger radii will be accounted for how large a feature space is encompassed by the hidden neuron 152. Use of such a score may also address overlap of feature spaces. Thus even though distances may be the same between two hidden neurons (e.g., 210A, 210B), the radii will help address which hidden neuron 152 is determined to be the closest hidden neuron 152.

At operation 706, the closest hidden neuron is set as the hidden neuron with the same class as the extracted feature. The closest hidden neuron 152 of the plurality of hidden neurons 152 may be set to be as the activated hidden neuron and as the hidden neuron 152 with the same class as the extracted feature. The remainder of hidden neurons 152 that otherwise would have been activated may be determined to not be activated and/or to have a different class than the extracted feature. Thus, only one hidden neuron 152 would be determined to be activated and/or have the same class as the extracted feature.

### EXEMPLARY APPARATUS AND SYSTEMS

Embodiments of the present disclosure herein include systems and apparatuses configured for and to perform one or more operations described herein.

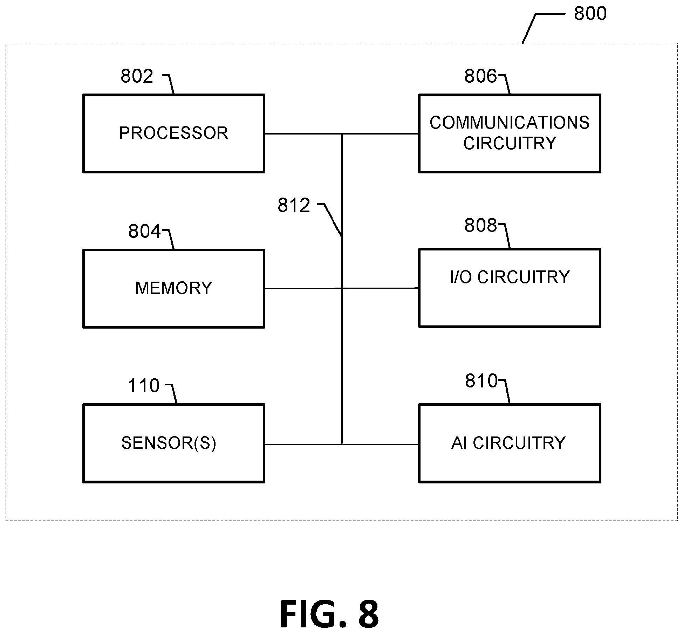

Figure 8 illustrates an example block diagram of a device in accordance with one or more embodiments of the present disclosure. Exemplary embodiments of the device 800 may include, for example, mobile devices, smart watches, temperatures monitors, etc. The device 800 illustrated includes a processor 802, memory 804, communications circuitry 806, and input/output circuitry 808, and AI circuitry 810, which may all be connected via a bus 812. The device 800 illustrated may also include one or more sensors 110, which may also be connected via bust 812. In various embodiments, the sensor(s) 110 may be connected via the communications circuitry 806 and/or the input/output circuitry 808. In various embodiments, the sensor(s) 110 be connected to be but external to the device 800. For example, a temperature sensor may need to be located externally to the device 800 to take a temperature measurement.

The processor 802, although illustrated as a single block, may be comprised of a plurality of components and/or processor circuitry. The processor 802 may be implemented as, for example, various components comprising one or a plurality of microprocessors with accompanying digital signal processors; one or a plurality of processors without accompanying digital signal processors; one or a plurality of coprocessors; one or a plurality of multi-core processors; processing circuits; and various other processing elements. The processor may include integrated circuits, such as ASICs, FPGAs, systems-on-a-chip (SoC), or combinations thereof. In various embodiments, the processor 802 may be configured to execute applications, instructions, and/or programs stored in the processor 802, memory 804, or otherwise accessible to the processor 802. When executed by the processor 802, these applications, instructions, and/or programs may enable the execution of one or a plurality of the operations and/or functions described herein. Regardless of whether it is configured by hardware, firmware/software methods, or a combination thereof, the processor 802 may comprise entities capable of executing operations and/or functions according to the embodiments of the present disclosure when correspondingly configured.

The memory 804 may comprise, for example, a volatile memory, a non-volatile memory, or a certain combination thereof. Although illustrated as a single block, the memory 804 may comprise a plurality of memory components. In various embodiments, the memory 804 may comprise, for example, a random access memory, a cache memory, a flash memory, a hard disk, a circuit configured to store information, or a combination thereof. The memory 804 may be configured to write or store data, information, application programs, instructions, etc. so that the processor 802 may execute various operations and/or functions according to the embodiments of the present disclosure. For example, in at least some embodiments, a memory 804 may be configured to buffer or cache data for processing by the processor 802. Additionally or alternatively, in at least some embodiments, the memory 804 may be configured to store program instructions for execution by the processor 802. The memory 804 may store information in the form of static and/or dynamic information. When the operations and/or functions are executed, the stored information may be stored and/or used by the processor 802.

In various embodiments, the processing capabilities of the processor 802 and the size of the memory 804 of device 800 may be limited. An example embodiment of a device 800 with such limitations may be a microcontroller. The limitations may be utilized by one or more operations as described herein, which may allow for such embodiments to overcome what are otherwise found to be limitations for implementing such operations.

The communication circuitry 806 may be implemented as a circuit, hardware, computer program product, or a combination thereof, which is configured to receive and/or transmit data from/to another component or apparatus. The computer program product may comprise computer-readable program instructions stored on a computer-readable medium (e.g., memory 804) and executed by a processor 802. In various embodiments, the communication circuitry 806 (as with other components discussed herein) may be at least partially implemented as part of the processor 802 or otherwise controlled by the processor 802. The communication circuitry 806 may communicate with the processor 802, for example, through a bus 810. Such a bus 810 may connect to the processor 802, and it may also connect to one or more other components of the processor 802. The communication circuitry 806 may be comprised of, for example, transmitters, receivers, transceivers, network interface cards and/or supporting hardware and/or firmware/software, and may be used for establishing communication with another component(s), apparatus(es), and/or system(s). The communication circuitry 806 may be configured to receive and/or transmit data that may be stored by, for example, the memory 804 by using one or more protocols that can be used for communication between components, apparatuses, and/or systems.

In various embodiments, the communication circuitry 806 may convert, transform, and/or package data into data packets and/or data objects to be transmitted and/or convert, transform, and/or unpackage data received, such as from a first protocol to a second protocol, from a first data type to a second data type, from an analog signal to a digital signal, from a digital signal to an analog signal, or the like. The communication circuitry 806 may additionally, or alternatively, communicate with the processor 802, the memory 804, the input/output circuitry 808, the AI circuitry 810 and/or the sensors 110, such as through a bus 210. Additionally, or alternatively, in some embodiments the communication circuitry may be at least partially implemented as a part of a sensor 110.

The input/output circuitry 808 may communicate with the processor 802 to receive instructions input by an operator and/or to provide audible, visual, mechanical, or other outputs to an operator. The input/output circuitry 808 may comprise supporting devices, such as a keyboard, a mouse, a user interface, a display, a touch screen display, lights (e.g., warning lights), indicators, speakers, and/or other input/output mechanisms. The input/output circuity 808 may comprise one or more interfaces to which supporting devices may be connected. In various embodiments, aspects of the input/output circuitry 808 may be implemented on a device used by the operator to communicate with the processor 802. The input/output circuitry 808 may communicate with the memory 804, the communication circuitry 806, the AI circuitry 810, and/or any other component, for example, through a bus 812.

The AI circuitry 810 may be implemented as any apparatus included in a circuit, hardware, computer program product, or a combination thereof, which is configured to perform one or more AI operations and/or function, such as those described herein. The AI circuitry 810 may include computer-readable program instructions for AI operations and/or functions stored on a computer-readable medium (e.g., memory 804) and executed by a processor 802. In various embodiments, the AI circuitry 810 may be at least partially implemented as part of the processor 802 or otherwise controlled by the processor 802. The AI circuitry 806 may communicate with the processor 802, for example, through a bus 810.

In various embodiments, the device 800 of Figure 8 may be a sensor that may include one or more components illustrated in Figure 8 and one or more of the operations described herein may be performed by a sensor 110. In such embodiments, the sensor 110 block of Figure 8 may be representative of a sensing element of the sensor. Alternatively or additionally, a sensing element and/or sensor 110 may be included in a device 800 that includes one or more components of Figure 8 as well as additional components not illustrated.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

Thus, while particular embodiments of the subject matter have been described, other embodiments are within the scope of the following claims.

While this detailed description has set forth some embodiments of the present disclosure, the appended claims may cover other embodiments of the present disclosure which differ from the described embodiments according to various modifications and improvements.

## Claims

1. A computer-implemented method for classifier learning, the method comprising:
sampling (402, 404) a sensor data stream (110) to generate a plurality of sensor data samples (310, 320, 330, 340);
extracting (406), via a feature extractor (120), a plurality of extracted features from the in plurality of sensor data samples (310, 320, 330, 340);
determining (410), via a classifier (130) and based on extracted features in the plurality of extracted features, a detection of a new feature of one or more of the extracted features,
training (810) the classifier (130) based on the plurality of extracted features,
wherein the classifier (130) comprises at least one input layer (140) of input neurons (142A, 142B, 142C, 142D, 142E,...,142N), a hidden layer (150) of hidden neurons (152A, 152B, 152C, 152D, 152E,...,152N), and an output layer (160) of output neurons (162A, 162B, 162C, 162D, 162E,...,162N), wherein each hidden neuron of the hidden layer (150) is associated with one output neuron of the output layer (160),wherein each output neuron of the output layer (160) is associated with one class of the classifier (130);
wherein training (810) the classifier (130) comprises:
adding (514) a new hidden neuron, wherein the new hidden neuron is associated with the new feature detected (410);
determining (418) an age score for each of the hidden neurons by either decrementing or incrementing the age every time the hidden neuron is activated; and
removing (420) one or more hidden neurons based on the age score of each the hidden neurons,wherein the method further comprises operating (702, 704, 706), after training (810) the classifier, the classifier (130) on one or more features extracted (120) from a further sensor data stream indicative of a physical activity of a user of a mobile sensor device sampling the sensor data stream (110) to determine the physical activity of the user of the mobile sensor device based on the generated plurality of sensor data samples (310, 320, 330, 340).

2. The method of claim 1, wherein:
- each sensor data sample of the plurality of sensor data samples (310, 320, 330, 340) includes a first plurality of dimensions, and
- extracting (406) a plurality of extracted features from the sensor data samples (310, 320, 330, 340) includes extracting a plurality of extracted features that includes a second plurality of dimensions, wherein the second plurality of dimensions is reduced from the first plurality of dimensions.

3. The method of claim 1, wherein:
- removing (420) one or more hidden neurons based on the age score of each of the hidden neurons includes removing from the hidden layer (150) at least one hidden neuron for each class of the classifier (130), and/or determining (418) an age score for each of the hidden neurons is based on the activation of each of the hidden neurons, wherein an activation of a hidden neuron is based on a distance associated with one or more extracted features from one or more hidden neurons of the hidden layer (150) being less than a radius (214A) of the one or more hidden neurons of the hidden layer (150).

4. The method of claim 1, comprising:
determining (502, 504), for each feature extracted, one or more activated hidden neurons;
decrementing (510) the age score of each of the activated hidden neurons that are associated with an output neuron of an incorrect class; and
incrementing (512) the age score of each of the activated hidden neurons that are associated with an output neuron of a correct class.

5. The method of claim 1, further comprising:
requesting, prior to removing (420) one or more hidden neurons, a threshold from a user via a user interface (808), and
receiving (602), via the user interface (808), the threshold;
wherein removing (420) one or more hidden neurons is further based on a total number of hidden neurons exceeding a threshold (604, 612).

6. The method of claim 1, wherein sampling (402, 404) the sensor data stream (110) to generate the plurality of sensor data samples (310, 320, 330, 340) comprises:
generating (402) training data samples (320A) from the sensor data stream (110), wherein the training data samples (320A) are a first portion of the sensor data stream (110) during a first period of time, and wherein each of the training data samples (320A) are associated with a classification label of the classifier (130), and
generating testing data samples (320B) from the sensor data stream (110), wherein the testing data samples (320B) are a second portion of the sensor data stream (110) during the first period of time, and
wherein the plurality of sensor data samples (310, 320, 330, 340) comprises sensor data from the training data samples (320A).

7. The method of claim 1, wherein the feature extractor (120) comprises a convolutional neural network.

8. The method of claim 7,wherein a plurality of coefficients of the convolutional neural network of the feature extractor (120) is randomly initialized.

9. An apparatus (800), comprising:
at least one processor (802) and at least one memory (804) coupled to the processor (802), wherein the processor (802) is configured to:
sample (402) a sensor data stream (110) to generate a plurality of sensor data samples (310, 320, 330, 340);
extract (404), via a feature extractor (120), a plurality of extracted features from the plurality of sensor data samples (310, 320, 330, 340);
determine (406), via a classifier (130) and based on the plurality of extracted features, a detection of a new feature for one or more of the extracted features, and
train (810) the classifier based on the plurality of extracted features,
wherein the classifier (130) comprises at least one input layer (140) of input neurons (142A, 142B, 142C, 142D, 142E,...,142N), a hidden layer (150) of hidden neurons (152A, 152B, 152C, 152D, 152E,...,152N), and an output layer (160) of output neurons (162A, 162B, 162C, 162D, 162E,...,162N), wherein each hidden neuron of the hidden layer (150) is associated with one output neuron of the output layer (160),wherein each output neuron of the output layer (160) is associated with one class of the classifier (130);
wherein the processor (802) is configured to:
add (514) a new hidden neuron, wherein the new hidden neuron is associated with the new feature;
determine (418) an age score for each of the hidden neurons by either decrementing or incrementing the age every time the hidden neuron is activated;
and
remove (420) one or more hidden neurons based on the age score of each the hidden neurons,
wherein the processor (802) is further configured to operate (702, 704, 706), after training (810) the classifier, the classifier on one or more features extracted (120) from a further sensor data stream indicative of a physical activity of a user of a mobile sensor device sampling the sensor data stream (110) to determine the physical activity of the user of the mobile sensor device based on the generated plurality of sensor data samples (310, 320, 330, 340).

10. The apparatus (800) of claim 9, wherein:
- each sensor data sample of the plurality of sensor data samples (310, 320, 330, 340) includes a first plurality of dimensions, and
- the processor (802) is configured to extract a plurality of extracted features that includes a second plurality of dimensions from the plurality of sensor data samples (310, 320, 330, 340),
wherein the second plurality of dimensions is reduced from the first plurality of dimensions.

11. The apparatus (800) of claim 9, wherein the processor (802) is further configured to:
- remove from the hidden layer (150) at least one hidden neuron for each class of the classifier (130) based on the age score of each of the hidden neurons, and/or- determine (418) an age score for each of the hidden neurons based on the activation of each of the hidden neurons, wherein an activation of hidden neurons is based on a distance associated with one or more extracted features from one or more hidden neurons of the hidden layer (150) being less than a radius (212A) of the one or more hidden neurons of the hidden layer (150).

12. The apparatus (800) of claim 9, wherein the processor (802) is further configured to:
determine (502, 504), for each feature extracted, one or more activated hidden neurons;
decrement (510) the age score of each of the activated hidden neurons that are associated with an output neuron of an incorrect class; and
increment (512) the age score of each of the activated hidden neurons that are associated with an output neuron of a correct class.

13. The apparatus (800) of claim 9, wherein the processor (802) is further configured to:
request, prior to removing one or more hidden neurons, a threshold from a user via a user interface (808);
receive (602), via the user interface (808), the threshold; and
wherein to remove (420) one or more hidden neurons is further based on a total number of hidden neurons exceeding a threshold (604, 612).

14. The apparatus of claim 9, wherein the processor (802) is further configured to:
generate training data samples (320A) from the sensor data stream (110), wherein the training data samples (320A) are a first portion of the sensor data stream (110) during a first period of time, and wherein each of the training data samples (320A) are associated with a classification label of the classifier (130);
generate testing data samples (320B) from the sensor data stream (110), wherein the testing data samples (320B) are a second portion of the sensor data stream (110) during the first period of time; and
wherein the plurality of sensor data samples (310, 320, 330, 340) comprises sensor data from the training data samples (320A).

15. The apparatus (800) of claim 9, wherein the feature extractor (120) comprises a convolutional neural network.

16. The apparatus (800) of claim 15, wherein a plurality of coefficients of the convolutional neural network of the feature extractor (120) is randomly initialized.

## Patentansprüche

1. Computerimplementiertes Verfahren zum Lernen von Klassifikatoren, wobei das Verfahren Folgendes umfasst:
Abtasten (402, 404) eines Sensordatenstroms (110) zum Erzeugen einer Vielzahl von Sensordatenabtastwerten (310, 320, 330, 340);
Extrahieren (406), über einen Merkmalsextraktor (120), einer Vielzahl von extrahierten Merkmalen aus der Vielzahl von Sensordatenabtastwerten (310, 320, 330, 340);
Bestimmen (410), über einen Klassifikator (130) und basierend auf extrahierten Merkmalen in der Vielzahl von extrahierten Merkmalen, einer Erkennung eines neuen Merkmals eines oder mehrerer der extrahierten Merkmale, Trainieren (810) des Klassifikators (130) basierend auf der Vielzahl von extrahierten Merkmalen,
wobei der Klassifikator (130) mindestens eine Eingangsschicht (140) von Eingangsneuronen (142A, 142B, 142C, 142D, 142E,...,142N), eine verborgene Schicht (150) verborgener Neuronen (152A, 152B, 152C, 152D, 152E,...,152N) und eine Ausgangsschicht (160) von Ausgangsneuronen (162A, 162B, 162C, 162D, 162E,...,162N) umfasst, wobei jedes verborgene Neuron der verborgenen Schicht (150) mit einem Ausgangsneuron der Ausgangsschicht (160) zugeordnet ist, wobei jedes Ausgangsneuron der Ausgangsschicht (160) einer Klasse des Klassifikators (130) zugeordnet ist;
wobei das Trainieren (810) des Klassifikators (130) Folgendes umfasst:
Hinzufügen (514) eines neuen verborgenen Neurons, wobei das neue verborgene Neuron dem neuen erkannten Merkmal (410) zugeordnet ist;
Bestimmen (418) eines Alterswerts für jedes der verborgenen Neuronen durch Dekrementieren oder Inkrementieren des Alters jedes Mal, wenn das verborgene Neuron aktiviert wird; und
Entfernen (420) eines oder mehrerer verborgener Neuronen basierend auf dem Alterswert jedes der verborgenen Neuronen, wobei das Verfahren ferner nach dem Trainieren (810) des Klassifikators das Betreiben (702, 704, 706) des Klassifikators (130) auf einem oder mehreren Merkmalen umfasst, die aus einem weiteren Sensordatenstrom (120) extrahiert wurden, der auf eine physische Aktivität eines Benutzers einer mobilen Sensorvorrichtung hinweist, die den Sensordatenstrom (110) abtastet, um die physische Aktivität des Benutzers der mobilen Sensorvorrichtung basierend auf der erzeugten Vielzahl von Sensordatenabtastwerten (310, 320, 330, 340) zu bestimmen.

2. Verfahren nach Anspruch 1, wobei:
- jeder Sensordatenabtastwert der Vielzahl von Sensordatenabtastwerten (310, 320, 330, 340) eine erste Vielzahl von Dimensionen einschließt, und
- das Extrahieren (406) einer Vielzahl von extrahierten Merkmalen aus den Sensordatenabtastwerten (310, 320, 330, 340) das Extrahieren einer Vielzahl von extrahierten Merkmalen einschließt, die eine zweite Vielzahl von Dimensionen einschließen, wobei die zweite Vielzahl von Dimensionen gegenüber der ersten Vielzahl von Dimensionen reduziert ist.

3. Verfahren nach Anspruch 1, wobei:
- das Entfernen (420) eines oder mehrerer verborgener Neuronen basierend auf dem Alterswert jedes der verborgenen Neuronen das Entfernen von mindestens einem verborgenen Neuron für jede Klasse des Klassifikators (130) aus der verborgenen Schicht (150) einschließt und/oder das Bestimmen (418) eines Alterswerts für jedes der verborgenen Neuronen auf der Aktivierung jedes der verborgenen Neuronen basiert, wobei eine Aktivierung eines verborgenen Neurons darauf basiert, dass ein Abstand, der einem oder mehreren extrahierten Merkmalen aus einem oder mehreren verborgenen Neuronen der verborgenen Schicht (150) zugeordnet ist, kleiner als ein Radius (214A) der einen oder mehreren verborgenen Neuronen der verborgenen Schicht (150) ist.

4. Verfahren nach Anspruch 1, das Folgendes umfasst:
Bestimmen (502, 504), für jedes extrahierte Merkmal, eines oder mehrerer aktivierter verborgener Neuronen;
Dekrementieren (510) des Alterswerts jedes der aktivierten verborgenen Neuronen, die einem Ausgangsneuron einer falschen Klasse zugeordnet sind; und
Inkrementieren (512) des Alterswerts jedes der aktivierten verborgenen Neuronen, die einem Ausgangsneuron einer korrekten Klasse zugeordnet sind.

5. Verfahren nach Anspruch 1, das ferner Folgendes umfasst:
Anfordern, vor dem Entfernen (420) eines oder mehrerer verborgener Neuronen, eines Schwellenwerts von einem Benutzer über eine Benutzeroberfläche (808), und
Empfangen (602), über die Benutzeroberfläche (808), des Schwellenwerts;
wobei das Entfernen (420) eines oder mehrerer verborgener Neuronen ferner auf einer Gesamtzahl verborgener Neuronen basiert, die einen Schwellenwert (604, 612) überschreitet.

6. Verfahren nach Anspruch 1, wobei das Abtasten (402, 404) des Sensordatenstroms (110) zum Erzeugen der Vielzahl von Sensordatenabtastwerten (310, 320, 330, 340) Folgendes umfasst:
Erzeugen (402) von Trainingsdatenabtastwerten (320A) aus dem Sensordatenstrom (110), wobei die Trainingsdatenabtastwerte (320A) während eines ersten Zeitraums ein erster Teil des Sensordatenstroms (110) sind, und wobei jeder der Trainingsdatenabtastwerte (320A) einer Klassifizierungskennzeichnung des Klassifikators (130) zugeordnet ist, und
Erzeugen von Testdatenabtastwerten (320B) aus dem Sensordatenstrom (110), wobei die Testdatenabtastwerte (320B) während des ersten Zeitraums ein zweiter Teil des Sensordatenstroms (110) sind, und
wobei die Vielzahl von Sensordatenabtastwerten (310, 320, 330, 340) Sensordaten aus den Trainingsdatenabtastwerten (320A) umfasst.

7. Verfahren nach Anspruch 1, wobei der Merkmalsextraktor (120) ein konvolutionales neuronales Netzwerk ist.

8. Verfahren nach Anspruch 7, wobei eine Vielzahl von Koeffizienten des konvolutionalen neuronalen Netzwerks des Merkmalsextraktors (120) zufällig initialisiert werden.

9. Einrichtung (800), die Folgendes umfasst:
mindestens einen Prozessor (802) und mindestens einen Speicher (804), der mit dem Prozessor (802) gekoppelt ist, wobei der Prozessor (802) für Folgendes konfiguriert ist:
Abtasten (402, 404) eines Sensordatenstroms (110) zum Erzeugen einer Vielzahl von Sensordatenabtastwerten (310, 320, 330, 340);
Extrahieren (404), über einen Merkmalsextraktor (120), einer Vielzahl von extrahierten Merkmalen aus der Vielzahl von Sensordatenabtastwerten (310, 320, 330, 340);
Bestimmen (406), über einen Klassifikator (130) und basierend auf der Vielzahl von extrahierten Merkmalen, einer Erkennung eines neuen Merkmals für eines oder mehrere der extrahierten Merkmale, und
Trainieren (810) des Klassifikators basierend auf der Vielzahl von extrahierten Merkmalen,
wobei der Klassifikator (130) mindestens eine Eingangsschicht (140) von Eingangsneuronen (142A, 142B, 142C, 142D, 142E,...,142N), eine verborgene Schicht (150) verborgener Neuronen (152A, 152B, 152C, 152D, 152E,...,152N) und eine Ausgangsschicht (160) von Ausgangsneuronen (162A, 162B, 162C, 162D, 162E,...,162N) umfasst, wobei jedes verborgene Neuron der verborgenen Schicht (150) mit einem Ausgangsneuron der Ausgangsschicht (160) zugeordnet ist, wobei jedes Ausgangsneuron der Ausgangsschicht (160) einer Klasse des Klassifikators (130) zugeordnet ist;
wobei der Prozessor (802) für Folgendes konfiguriert ist:
Hinzufügen (514) eines neuen verborgenen Neurons, wobei das neue verborgene Neuron dem neuen Merkmal zugeordnet ist;
Bestimmen (418) eines Alterswerts für jedes der verborgenen Neuronen durch Dekrementieren oder Inkrementieren des Alters jedes Mal, wenn das verborgene Neuron aktiviert wird; und
Entfernen (420) eines oder mehrerer verborgener Neuronen basierend auf dem Alterswert jedes der verborgenen Neuronen,
wobei der Prozessor (802) ferner so konfiguriert ist, dass er nach dem Trainieren (810) des Klassifikators den Klassifikator auf einem oder mehreren Merkmalen betreibt (702, 704, 706), die aus einem weiteren Sensordatenstrom (120) extrahiert wurden, der auf eine physische Aktivität eines Benutzers einer mobilen Sensorvorrichtung hinweist, die den Sensordatenstrom (110) abtastet, um die physische Aktivität des Benutzers der mobilen Sensorvorrichtung basierend auf der erzeugten Vielzahl von Sensordatenabtastwerten (310, 320, 330, 340) zu bestimmen.

10. Einrichtung (800) nach Anspruch 9, wobei:
- jeder Sensordatenabtastwert der Vielzahl von Sensordatenabtastwerten (310, 320, 330, 340) eine erste Vielzahl von Dimensionen einschließt, und
- der Prozessor (802) so konfiguriert ist, dass er eine Vielzahl von extrahierten Merkmalen extrahiert, die eine zweite Vielzahl von Dimensionen aus der Vielzahl von Sensordatenabtastwerten (310, 320, 330, 340) einschließt, wobei die zweite Vielzahl von Dimensionen gegenüber der ersten Vielzahl von Dimensionen reduziert ist.

11. Einrichtung (800) nach Anspruch 9, wobei der Prozessor (802) ferner für Folgendes konfiguriert ist:
- Entfernen von mindestens einem verborgenen Neuron aus der verborgenen Schicht (150) für jede Klasse des Klassifikators (130) basierend auf dem Alterswert jedes der verborgenen Neuronen und/oder Bestimmen (418) eines Alterswerts für jedes der verborgenen Neuronen basierend auf der Aktivierung jedes der verborgenen Neuronen, wobei eine Aktivierung verborgener Neuronen darauf basiert, dass ein Abstand, der einem oder mehreren extrahierten Merkmalen aus einem oder mehreren verborgenen Neuronen der verborgenen Schicht (150) zugeordnet ist, kleiner als ein Radius (212A) der einen oder mehreren verborgenen Neuronen der verborgenen Schicht (150) ist.

12. Einrichtung (800) nach Anspruch 9, wobei der Prozessor (802) ferner für Folgendes konfiguriert ist:
Bestimmen (502, 504), für jedes extrahierte Merkmal, eines oder mehrerer aktivierter verborgener Neuronen;
Dekrementieren (510) des Alterswerts jedes der aktivierten verborgenen Neuronen, die einem Ausgangsneuron einer falschen Klasse zugeordnet sind; und
Inkrementieren (512) des Alterswerts jedes der aktivierten verborgenen Neuronen, die einem Ausgangsneuron einer korrekten Klasse zugeordnet sind.

13. Einrichtung (800) nach Anspruch 9, wobei der Prozessor (802) ferner für Folgendes konfiguriert ist:
Anfordern, vor dem Entfernen eines oder mehrerer verborgener Neuronen, eines Schwellenwerts von einem Benutzer über eine Benutzeroberfläche (808);
Empfangen (602), über die Benutzeroberfläche (808), des Schwellenwerts; und
wobei das Entfernen (420) eines oder mehrerer verborgener Neuronen ferner auf einer Gesamtzahl verborgener Neuronen basiert, die einen Schwellenwert (604, 612) überschreitet.

14. Einrichtung nach Anspruch 9, wobei der Prozessor (802) ferner für Folgendes konfiguriert ist:
Erzeugen von Trainingsdatenabtastwerten (320A) aus dem Sensordatenstrom (110), wobei die Trainingsdatenabtastwerte (320A) während eines ersten Zeitraums ein erster Teil des Sensordatenstroms (110) sind, und wobei jeder der Trainingsdatenabtastwerte (320A) einer Klassifizierungskennzeichnung des Klassifikators (130) zugeordnet ist;
Erzeugen von Testdatenabtastwerten (320B) aus dem Sensordatenstrom (110), wobei die Testdatenabtastwerte (320B) während des ersten Zeitraums ein zweiter Teil des Sensordatenstroms (110) sind; und
wobei die Vielzahl von Sensordatenabtastwerten (310, 320, 330, 340) Sensordaten aus den Trainingsdatenabtastwerten (320A) umfasst.

15. Einrichtung (800) nach Anspruch 9, wobei der Merkmalsextraktor (120) ein konvolutionales neuronales Netzwerk umfasst.

16. Einrichtung (800) nach Anspruch 15, wobei eine Vielzahl von Koeffizienten des konvolutionalen neuronalen Netzwerks des Merkmalsextraktors (120) zufällig initialisiert werden.

## Revendications

1. Procédé mis en œuvre informatiquement d'apprentissage de classificateur, le procédé comprenant :
d'échantillonner (402, 404) un flux de données de capteur (110) pour générer une pluralité d'échantillons de données de capteur (310, 320, 330, 340) ;
d'extraire (406), via un extracteur de caractéristiques (120), une pluralité de caractéristiques extraites de la pluralité d'échantillons de données de capteur (310, 320, 330, 340) ;
de déterminer (410), via un classificateur (130) et en se basant sur des caractéristiques extraites parmi la pluralité de caractéristiques extraites, une détection d'une nouvelle caractéristique d'une ou plusieurs des caractéristiques extraites,
d'entraîner (810) le classificateur (130) en se basant sur la pluralité de caractéristiques extraites,
dans lequel le classificateur (130) comprend au moins une couche d'entrée (140) de neurones d'entrée (142A, 142B, 142C, 142D, 142E,...,142N), une couche cachée (150) de neurones cachés (152A, 152B, 152C, 152D, 152E,...,152N), et une couche de sortie (160) de neurones de sortie (162A, 162B, 162C, 162D, 162E,...,162N), dans lequel chaque neurone caché de la couche cachée (150) est associé à un neurone de sortie de la couche de sortie (160), dans lequel chaque neurone de sortie de la couche de sortie (160) est associé à une classe du classificateur (130) ;
dans lequel entraîner (810) le classificateur (130) comprend :
d'ajouter (514) un nouveau neurone caché, dans lequel le nouveau neurone caché de la couche cachée (150) est associé à la nouvelle caractéristique détectée (410) ;
de déterminer (418) un score d'âge pour chacun des neurones cachés en décrémentant ou incrémentant l'âge chaque fois que le neurone caché est activé ; et
d'enlever (420) un ou plusieurs neurones cachés en se basant sur le score d'âge de chacun des neurones cachés, dans lequel le procédé comprend en outre de faire fonctionner (702, 704, 706), après entraînement (810) du classificateur, le classificateur (130) sur une ou plusieurs caractéristiques extraites (120) d'un autre flux de données de capteur indicatif d'une activité physique d'un utilisateur d'un dispositif de capteur mobile échantillonnant le flux de données de capteur (110) pour déterminer l'activité physique de l'utilisateur du dispositif de capteur mobile en se basant sur la pluralité d'échantillons de données de capteur générée.

2. Procédé selon la revendication 1, dans lequel :
chaque échantillon de données de capteur de la pluralité d'échantillons de données de capteur (310, 320, 330, 340) inclut une première pluralité de dimensions, et
extraire (406) une pluralité de caractéristiques extraites des échantillons de données de capteur (310, 320, 330, 340) inclut d'extraire une pluralité de caractéristiques extraites qui incluent une seconde pluralité de dimensions, dans lequel la seconde pluralité de dimensions est réduite depuis la première pluralité de dimensions.

3. Procédé selon la revendication 1, dans lequel :
enlever (420) un ou plusieurs neurones cachés en se basant sur le score d'âge de chacun des neurones cachés inclut d'enlever de la couche cachée (150) au moins un neurone caché pour chaque classe du classificateur (130), et/ou de déterminer (418) un score d'âge pour chacun des neurones cachés est basé sur l'activation de chacun des neurones cachés, dans lequel une activation d'un neurone caché est basée sur une distance associée à une ou plusieurs caractéristiques extraites d'un ou plusieurs neurones cachés de la couche cachée (150) étant inférieure à un rayon (214A) des un ou plusieurs neurones cachés de la couche cachée (150).

4. Procédé selon la revendication 1, comprenant :
de déterminer (502, 504), pour chaque caractéristique extraite, un ou plusieurs neurones cachés activés ;
de décrémenter (510) le score d'âge de chacun des neurones cachés activés qui sont associés à un neurone de sortie d'une classe incorrecte ; et
d'incrémenter (512) le score d'âge de chacun des neurones cachés activés qui sont associés à un neurone de sortie d'une classe correcte.

5. Procédé selon la revendication 1, comprenant en outre :
de requérir, avant d'enlever (420) un ou plusieurs neurones cachés, un seuil d'un utilisateur via une interface utilisateur (808), et
de recevoir (602), via l'interface utilisateur (808), le seuil ;
dans lequel enlever (420) les un ou plusieurs neurones cachés est en outre basé sur un nombre total de neurones cachés dépassant un seuil (604, 612).

6. Procédé selon la revendication 1, dans lequel échantillonner (402, 404) le flux de données de capteur (110) pour générer la pluralité d'échantillons de données de capteur (310, 320, 330, 340) comprend :
de générer (402) des échantillons de données d'entraînement (320A) depuis le flux de données de capteur (110); dans lequel les échantillons de données d'entraînement (320A) sont une première partie du flux de données de capteur (110) pendant une première période de temps, et dans lequel chacun des échantillons de données d'entraînement (320A) sont associés à une étiquette de classification du classificateur (130), et
de générer des échantillons de données de test (320B) depuis le flux de données de capteur (110), dans lequel les échantillons de données de test (320B) sont une seconde partie du flux de données de capteur (110) pendant la première période de temps, et
dans lequel la pluralité d'échantillons de données de capteur (310, 320, 330, 340) comprend des données de capteurs venant des échantillons de données d'entraînement (320A).

7. Procédé selon la revendication 1, dans lequel l'extracteur de caractéristiques (120) comprend un réseau neuronal convolutif.

8. Procédé selon la revendication 7, dans lequel une pluralité de coefficients du réseau neuronal convolutif de l'extracteur de caractéristiques (120) est initialisée aléatoirement.

9. Dispositif (800), comprenant :
au moins un processeur (802) et au moins une mémoire (804) couplée au processeur (802), dans lequel le processeur (802) est configuré pour :
échantillonner (402) un flux de données de capteur (110) pour générer une pluralité d'échantillons de données de capteur (310, 320, 330, 340) ;
extraire (404), via un extracteur de caractéristiques (120), une pluralité de caractéristiques extraites de la pluralité d'échantillons de données de capteur (310, 320, 330, 340) ;
déterminer (406), via un classificateur (130) et en se basant sur la pluralité de caractéristiques extraites, une détection d'une nouvelle caractéristique pour une ou plusieurs des caractéristiques extraites,
entraîner (810) le classificateur en se basant sur la pluralité de caractéristiques extraites,
dans lequel le classificateur (130) comprend au moins une couche d'entrée (140) de neurones d'entrée (142A, 142B, 142C, 142D, 142E,...,142N), une couche cachée (150) de neurones cachés (152A, 152B, 152C, 152D, 152E,...,152N), et une couche de sortie (160) de neurones de sortie (162A, 162B, 162C, 162D, 162E,...,162N), dans lequel chaque neurone caché de la couche cachée (150) est associé à un neurone de sortie de la couche de sortie (160), dans lequel chaque neurone de sortie de la couche de sortie (160) est associé à une classe du classificateur (130) ;
dans lequel le processeur (802) est configuré pour ;
ajouter (514) un nouveau neurone caché, dans lequel le nouveau neurone caché de la couche cachée (150) est associé à la nouvelle caractéristique ;
déterminer (418) un score d'âge pour chacun des neurones cachés en décrémentant ou incrémentant l'âge chaque fois que le neurone caché est activé ; et
enlever (420) un ou plusieurs neurones cachés en se basant sur le score d'âge de chacun des neurones cachés, dans lequel le processeur (802) est configuré en outre pour faire fonctionner (702, 704, 706), après entraînement (810) du classificateur, le classificateur sur une ou plusieurs caractéristiques extraites (120) d'un autre flux de données de capteur indicatif d'une activité physique d'un utilisateur d'un dispositif de capteur mobile échantillonnant le flux de données de capteur (110) pour déterminer l'activité physique de l'utilisateur du dispositif de capteur mobile en se basant sur la pluralité d'échantillons de données de capteur (310, 320, 330, 340) générée.

10. Dispositif (800) selon la revendication 9, dans lequel :
chaque échantillon de données de capteur de la pluralité d'échantillons de données de capteur (310, 320, 330, 340) inclut une première pluralité de dimensions, et
le processeur (802) est configuré pour extraire une pluralité de caractéristiques extraites qui incluent une seconde pluralité de dimensions de la pluralité d'échantillons de données de capteur (310, 320, 330, 340),
dans lequel la seconde pluralité de dimensions est réduite depuis la première pluralité de dimensions.

11. Dispositif (800) selon la revendication 9, dans lequel le processeur (802) est configuré en outre pour :
enlever de la couche cachée (150) au moins un neurone caché pour chaque classe du classificateur (130) en se basant sur le score d'âge de chacun des neurones cachés, et/ou déterminer (418) un score d'âge pour chacun des neurones cachés en se basant sur l'activation de chacun des neurones cachés, dans lequel une activation des neurones cachés est basée sur une distance associée à une ou plusieurs caractéristiques extraites d'un ou plusieurs neurones cachés de la couche cachée (150) étant inférieure à un rayon (214A) des un ou plusieurs neurones cachés de la couche cachée (150).

12. Dispositif (800) selon la revendication 9, dans lequel le processeur (802) est configuré en outre pour :
déterminer (502, 504), pour chaque caractéristique extraite, un ou plusieurs neurones cachés activés ;
décrémenter (510) le score d'âge de chacun des neurones cachés activés qui sont associés à un neurone de sortie d'une classe incorrecte ; et
incrémenter (512) le score d'âge de chacun des neurones cachés activés qui sont associés à un neurone de sortie d'une classe correcte.

13. Dispositif (800) selon la revendication 9, dans lequel le processeur (802) est configuré en outre pour :
requérir, avant d'enlever un ou plusieurs neurones cachés, un seuil d'un utilisateur via une interface utilisateur (808),
recevoir (602), via l'interface utilisateur (808), le seuil ; et
dans lequel enlever (420) les un ou plusieurs neurones cachés est en outre basé sur un nombre total de neurones cachés dépassant un seuil (604, 612).

14. Dispositif (800) selon la revendication 9, dans lequel le processeur (802) est configuré en outre pour :
générer des échantillons de données d'entraînement (320A) depuis le flux de données de capteur (110), dans lequel les échantillons de données d'entraînement (320A) sont une première partie du flux de données de capteur (110) pendant une première période de temps, et dans lequel chacun des échantillons de données d'entraînement (320A) sont associés à une étiquette de classification du classificateur (130) ;
générer des échantillons de données de test (320B) depuis le flux de données de capteur (110), dans lequel les échantillons de données de test (320B) sont une seconde partie du flux de données de capteur (110) pendant la première période de temps, et
dans lequel la pluralité d'échantillons de données de capteur (310, 320, 330, 340) comprend des données de capteurs venant des échantillons de données d'entraînement (320A).

15. Dispositif (800) selon la revendication 9, dans lequel l'extracteur de caractéristiques (120) comprend un réseau neuronal convolutif.

16. Dispositif (800) selon la revendication 15, dans lequel une pluralité de coefficients du réseau neuronal convolutif de l'extracteur de caractéristiques (120) est initialisée aléatoirement.
